# EUROPÄISCHE PATENTSCHRIFT

(11) **EP 4 100 673 B1**
(45) Veröffentlichungstag und Bekanntmachung des Hinweises auf die Patenterteilung: **31.01.2024**
(21) Anmeldenummer: 21703195.4
(22) Anmeldetag: 01.02.2021
(51) Int. Cl.: F16K 17/00, F16K 17/28, A62B 13/00, A62C 4/00

(54) **PASSIV ARBEITENDE MECHANISCHE FUNKTIONSEINHEIT FÜR EIN STOSSWELLENSCHUTZVENTIL UND STOSSWELLENSCHUTZVENTIL**
PASSIVELY OPERATING MECHANICAL FUNCTIONAL UNIT FOR A SHOCK WAVE PROTECTION VALVE, AND SHOCK WAVE PROTECTION VALVE
UNITÉ FONCTIONNELLE MÉCANIQUE À FONCTIONNEMENT PASSIF POUR SOUPAPE DE PROTECTION CONTRE LES ONDES DE CHOC, ET SOUPAPE DE PROTECTION CONTRE LES ONDES DE CHOC ASSOCIÉE

(30) Priorität: 05.02.2020 CH 1322020
(43) Veröffentlichungstag der Anmeldung: 14.12.2022
(73) Patentinhaber: Andair AG, 8450 Andelfingen (CH)
(72) Erfinder: SCHILLING, Michel, 8542 Wiesendangen (CH); RIEDO, Michael, 8462 Rheinau (CH); TILLENKAMP, Frank, 8400 Winterthur (CH); SCHNEIDER, Martin, 9242 Oberuzwil (CH); BRENNER, Lorenz, 8404 Winterthur (CH); STÄHLI, Patrick, 8406 Winterthur (CH); DENZLER, David, 8484 Weisslingen (CH); EBERLEIN, Robert, 8458 Dorf (CH)
(74) Vertreter: Keller Schneider Patent- und Markenanwälte AG
(86) Internationale Anmeldenummer: PCT/EP2021/052316
(87) Internationale Veröffentlichungsnummer: WO 2021/156206

(56) Entgegenhaltungen:
- DE-U1-202016 004 209
- US-A- 3 139 108

## Beschreibung

### Technisches Gebiet

Die Erfindung betrifft eine passiv arbeitende mechanische Funktionseinheit für ein Stosswellenschutzventil, insbesondere für eine Lüftungsanlage, einen Strömungskanal mit einem Durchströmbereich, welcher in einer Strömungsrichtung von einem Lüftungsstrom durchströmbar ist und der in einem Störungsfall in einer Sperrrichtung infolge einer in Sperrrichtung propagierenden Stosswelle blocl<ierbar ist. Weiter umfasst die Funktionseinheit eine blattartige Ventilklappe, die in einer Offenstellung gehalten ist und die in einem Störungsfall durch die Stosswelle zumindest abschnittweise quer zur Strömungsrichtung in den Durchströmbereich in eine Schliessstellung auslenkbar ist, in welcher der Durchströmbereich in der Sperrrichtung von der Ventilklappe blockiert ist. Die Erfindung betrifft auch ein Stosswellenschutzventil umfasst eine derartige Funktionseinheit sowie eine Lüftungsanlage und eine Prüfanlage mit einem derartigen Stossventil. Weiter betrifft die Erfindung ein Verfahren zum Messen eines Schliessdrucks und/oder eines Strömungswiderstandes eines derartigen Stosswellenschutzventils sowie dessen Verwendung in einem Prüflabor.

### Stand der Technik

Stosswellenschutzventile werden vornehmlich in Bereichen eingesetzt, in denen eine Belüftung erforderlich ist, jedoch das Risiko besteht, dass Personen oder Anlagen infolge von Druckluftstössen Schaden nehmen können. Beispielsweise werden Stosswellenschutzventile als Drucl<wellensicherung für die Zu- und Abluftöffnungen von Lüftungskanälen von Schutzräumen für Personen oder Anlagen, Containments für Kernkraftwerke, Offshore-Anlagen oder militärischen Bauten eingesetzt. Stosswellenschutzventile bieten hierbei wirksamen Schutz gegen die Einwirkungen der Druckwellen von z.B. nuklearen oder konventionellen Detonationen und verhindern eine Propagation der Druckwelle in die Lüftungskanäle der Lüftungsanlage bzw. aus den Lüftungskanälen heraus.

Unterschieden wird zwischen aktiven und passiven Stosswellenschutzventilen: Aktive Stosswellenschutzventile benötigen für den drucksicheren Verschluss Fremdenergie und eine Steuerung. Sie registrieren mit Hilfe von Sensoren den von der eingehenden Stosswelle verursachten Druckanstieg und lösen in der Folge durch eine Aktuator den Verschluss des Ventils aus. Passive Stosswellenschutzventile hingegen sind ohne Fremdenergie und Steuerung funktionsfähig, reagieren einzig auf die Wirkung der Stosswelle und verhindern aufgrund ihrer baulichen Beschaffenheit eine Druckausbreitung innerhalb der Rohrleitungen sowie in angrenzende Anlagenteile.

Ein derartiges passives Stosswellenschutzventil in einem Zuluft- bzw. Abluftkanal eines Boilers im militärischen Bereich ist z.B. aus der US 3,139,108 bekannt. Dieses weist mehrere elastische Ventilbleche auf, welche zwischen benachbarten Durchtrittöffnungen für einen Luftstrom angeordnet sind. In der Offenstellung ragen die Ventilbleche bezüglich einer Strömungsrichtung schräg nach aussen in den an- oder abströmenden Luftstrom. Infolge eines Anpralls einer von aussen eingehenden Stosswelle werden die Ventilklappen auf die Durchtrittöffnungen in eine Schliessstellung gebogen, sodass diese verschlossen werden. Nach dem Durchgang der Stosswelle gelangen die elastischen Ventilbleche automatisch wieder in die Offenstellung zurück. Hierbei besteht der Nachteil, dass die Ventilbleche mit einer beträchtlichen Neigung in den Luftstrom ragen müssen, damit ausreichend Angriffsfläche für die Stosswelle besteht. Damit geht jedoch ein beträchtlicher Strömungswiderstand einher. Zudem müssen die Ventilbleche zum Verschliessen verhältnismässig stark aus der Offenstellung gebogen werden, womit das Risiko einer unerwünschten plastischen Verformung besteht und besondere, kostenintensive Materialien für die Ventilbleche erforderlich sind. Zudem betrifft die Anwendung den militärischen Bereich und ist daher nicht ohne weiteres auf einfache Weise und wirtschaftlich in z.B. einem zivilen Bereich anwendbar. DE202016004209U1 offenbart eine passiv arbeitende mechanische Funktionseinheit gemäß dem Oberbegriff des Anspruchs 1.

### Darstellung der Erfindung

Aufgabe der Erfindung ist es daher, eine dem eingangs genannten technischen Gebiet zugehörende passiv arbeitende mechanische Funktionseinheit für ein Stosswellenschutzventil sowie ein Stosswellenschutzventil zu schaffen, welche die Nachteile des Standes der Technik überwinden. Insbesondere ist es eine Aufgabe der Erfindung, eine kostengünstig herstellbare und konstruktiv einfache derartige Funktionseinheit für ein Stosswellenschutzventil sowie ein derartiges Stosswellenschutzventil, insbesondere für die Raumbelüftung, bereitzustellen, welche bei guten Sperreigenschaften einen vergleichsweise geringen Strömungswiderstand aufweisen. Weiter ist es eine Aufgabe der Erfindung, ein Verfahren zum Messen eines Schliessdrucks und/oder eines Strömungswiderstandes sowie eine Verwendung eines derartigen Stosswellenschutzventils bereitzustellen.

Die Lösung der Aufgabe ist durch die Merkmale der unabhängigen Ansprüche definiert. Gemäss der Erfindung umfasst eine passiv arbeitende mechanische Funktionseinheit für ein Stosswellenschutzventil, insbesondere für eine Lüftungsanlage, einen Strömungskanal mit einem Durchströmbereich, welcher in einer Strömungsrichtung von einem Lüftungsstrom durchströmbar ist und der in einem Störungsfall in einer Sperrrichtung infolge einer in Sperrrichtung propagierenden Stosswelle blocl<ierbar ist. Weiter umfasst die Funktionseinheit eine blattartige Ventilklappe, die in einer Offenstellung gehalten ist und die in einem Störungsfall durch die Stosswelle zumindest abschnittweise quer zur Strömungsrichtung in den Durchströmbereich in eine Schliessstellung auslenkbar ist, in welcher der Durchströmbereich in der Sperrrichtung von der Ventilklappe blockiert ist. Die Funktionseinheit zeichnet sich dadurch aus, dass die Ventilklappe in der Offenstellung im Wesentlichen in Strömungsrichtung ausgerichtet ist und zwischen einem im Strömungskanal angeordneten und entgegen der Sperrrichtung offenen Stauraum und dem Durchströmbereich derart angeordnet ist, dass im Störungsfall beim Durchgang der Stosswelle durch die Stosswelle im Stauraum ein Druck aufbaubar ist, welcher die Ventilklappe zumindest abschnittweise quer zur Strömungsrichtung drückt und in den Durchströmbereich auslenkt, sodass die Ventilklappe in die Schliessstellung gelangt.

Eine Dimension in Strömungsrichtung wird vorliegend als "Länge" bezeichnet während zwei senkrecht zur Strömungsrichtung und senkrecht zueinander ausgerichtete Dimensionen als "Breite" und "Höhe" bezeichnet werden. Die Höhe bezeichnet dabei die Dimension in derjenigen Richtung, in welcher die Ventilklappe zwischen Stauraum und Durchströmbereich angeordnet ist.

Der "Strömungskanal" bezeichnet einen sich in Strömungsrichtung erstreckenden Abschnitt der Funktionseinheit, welcher in Längsrichtung beidseitig sich im Wesentlichen über seinen gesamten endseitigen Querschnitt erstreckende Öffnungen aufweist. Der Querschnitt des Strömungskanals kann konstant sein oder sich in Strömungsrichtung verändern. Der Querschnitt kann grundsätzlich rund oder vieleckig, insbesondere rechteckig, sein. Im Betrieb kann der Strömungskanal durch die Öffnungen über seinen gesamten endseitigen Querschnitt von dem Lüftungsstrom angeströmt werden. In der Regel ist der Strömungskanal von einer Begrenzungswand oder mehreren Begrenzungswänden umschlossen und durch diese senkrecht zur Strömungsrichtung begrenzt.

Der "Durchströmbereich" bezeichnet einen Bereich des Strömungskanals, durch welchen der Lüftungsstrom weitgehend ungehindert in der Strömungsrichtung strömen kann, wenn kein Störungsfall vorliegt. Der Durchströmbereich bildet einen Teilbereich des Strömungskanals und weist einen effektiven Querschnitt auf, welcher in Strömungsrichtung über die gesamte Länge des Strömungskanals für den Lüftungsstrom durchgängig ist, wenn kein Störungsfall vorliegt. Ein Störungsfall liegt vor, wenn z.B. infolge einer Detonation oder einer Deflagration eine Druck- oder Stosswelle im Lüftungsstrom eingeht, für deren Sperrung die Funktionseinheit vorgesehen und ausgebildet ist. Liegt im Betrieb kein Störungsfall vor, wird diese vorliegend als Normalbetrieb bezeichnet.

"blattartig" bezeichnet vorliegend eine Ausbildung der Ventilklappe als Platte mit zwei Hauptflächen, welche von umlaufenden, relativ dünnen Kante begrenzt sind. Die Ventilklappe kann z.B. aus einem Blech wie z.B. einem Edelstahlblech gefertigt sein. Die Ventilklappe ist zumindest abschnittweise quer zur Strömungsrichtung in den Durchströmbereich auslenkbar. Die Ventilklappe kann hierfür beispielsweise starr ausgebildet und um eine Schwenkachse schwenkbar sein oder sie kann biegsam ausgebildet sein und durch Biegung zumindest abschnittweise in den Durchströmbereich ausgelenkt werden.

Die "Offenstellung" bezeichnet eine Stellung der Ventilklappe, in welcher sie im Normalzustand, insbesondere im Normalbetrieb angeordnet ist. In der Offenstellung ist die Ventilklappe im Wesentlichen in Strömungsrichtung ausgerichtet, d.h. die Hauptflächen der Ventilklappe sind im Wesentlichen parallel zur Strömungsrichtung angeordnet. Im Wesentlichen parallel kann vorliegend geringfügige Abweichungen aus einer parallelen Stellung umfassen, welche bis zu 15° betragen können. Der effektive Querschnitt des Durchströmbereichs somit von der Ventilklappe nicht oder nur unwesentlich verringert oder versperrt, wenn sich diese in der Offenstellung befindet.

Die "Schliessstellung" bezeichnet eine Stellung der Ventilklappe, in welcher der Durchströmbereich von der Ventilklappe im Wesentlichen vollständig verschlossen ist, sodass dieser zumindest in Sperrrichtung nicht mehr vom Lüftungsstrom durchströmbar ist. Es versteht sich, dass in der Schliessstellung keine hermetische Abdichtung erfolgen muss. Wesentlich ist, dass in der Schliessstellung der Durchströmbereich für den Durchgang einer ausreichend starken Druckwelle im Lüftungsstrom, insbesondere einer Stosswelle blockiert ist.

Die "Sperrrichtung" bezeichnet diejenige Richtung, in welcher die Funktionseinheit den Durchgang einer Stosswelle blockieren kann. Die Sperrrichtung kann dabei der Strömungsrichtung gleichgerichtet oder entgegengerichtet sein, je nachdem ob die Funktionseinheit zur Anwendung im Sinne eines Druckventils respektive im Sinne eines Rückschlagventils vorgesehen ist.

Erfindungsgemäss ist im Strömungskanal neben der Ventilklappe der Stauraum derart ausgebildet, dass die Ventilklappe zwischen Durchströmbereich und Stauraum angeordnet ist. Der Stauraum definiert ein Stauvolumen im Strömungskanal und überdeckt einen Teilbereich des vom Lüftungsstrom angeströmten Querschnitts des Strömungskanals. Entgegen der Sperrrichtung, d.h. entgegen derjenigen Richtung, in welcher eine zu blockierende Stosswelle propagiert, ist der Stauraum zumindest bereichsweise offen, sodass das vom Stauraum definierte Stauvolumen mit dem Lüftungsstrom kommuniziert. In Sperrrichtung sowie in Richtung quer zur Strömungsrichtung ist der Stauraum im Wesentlichen gegenüber dem restlichen Strömungskanal, insbesondere gegenüber dem Durchströmbereich, abgeschlossen und bildet somit einen nicht durchströmbaren Sacl<bereich im Strömungskanal. In Richtung der Breite kann der Stauraum z.B. von Begrenzungswänden, insbesondere z.B. eines Gehäuses eines Stosswellenschutzventils oder hierfür vorgesehenen, separaten Trennwänden abgeschlossen sein.

Aufgrund des dynamischen Drucks einer mit der in Sperrrichtung eingehenden Stosswelle assoziierten Anströmung wird im Stauraum, im Gegensatz zum durchgängigen Durchströmbereich, ein Staudruck aufgebaut. Damit wird eine Druckdifferenz zwischen dem Stauraum und dem Durchströmbereich, d.h. ein Überdruck im Stauraum, erwirkt, welcher auf die dazwischen angeordnete Ventilklappe wirkt. Die Ventilklappe ist dabei derart auslenkbar ausgebildet, dass der Überdruck einen gewissen Schwellwert übersteigen muss, damit die Ventilklappe aus der Offenstellung in die Schliessstellung ausgelenkt wird. Der Schwellwert für den Überdruck definiert einen Übergang vom Normalbetrieb zum Störungsfall.

Indem die Ventilklappe erfindungsgemäss zwischen dem Stauraum und dem Durchströmbereich angeordnet ist, kann der im Stauraum aufgebaute Überdruck direkt und grossflächig auf die Ventilklappe wirken. Bei vergleichsweise kleinem angeströmten Querschnitt des Stauraums kann somit eine vergleichsweise grosse Kraft auf die Ventilklappe ausgeübt werde. Auf diese Weise wird erreicht, dass bei geringem Strömungswiderstand die Ventilklappe im Störungsfall zuverlässig in den Durchströmbereich ausgelenkt wird und in die Schliessstellung gelangt.

Zudem wird der Druck der in Sperrrichtung eingehenden Stosswelle durch den Stauraum in eine Kraft quer zur Strömungsrichtung auf die Ventilklappe umgewandelt. Damit braucht die Ventilklappe im Gegensatz zu bekannten einschlägigen Vorrichtungen in der Offenstellung zum Auslenken keine zur eingehenden Stosswelle hin gerichtete Angriffsfläche aufzuweisen, d.h. es ist z.B. kein Anstellwinkel bezüglich der Strömungsrichtung erforderlich. Entsprechend kann die Ventilklappe in der Offenstellung in Strömungsrichtung ausgerichtet angeordnet sein. Damit ragt die Ventilklappe in der Offenstellung nicht in den Durchströmbereich hinein und beeinträchtigt den effektiven Querschnitt des Durchströmbereichs zugunsten eines geringen Strömungswiderstands nicht. Ebenso ist die Ventilklappe erfindungsgemäss in der Offenstellung gehalten, d.h. ist derartig befestigt, dass in Abwesenheit von äusseren Kräften die Ventilklappe in der Offenstellung verbleibt, womit dem Lüftungsstrom beim Durchströmen keine Strömungsenergie zum Offenhalten entnommen wird bzw. werden muss.

Gesamthaft wird somit eine konstruktiv einfache Funktionseinheit für ein Stosswellenschutzventil bereitgestellt, welche eine zuverlässige Sperreigenschaft hat und einen vergleichsweise geringen Strömungswiderstand aufweist. Die Funktionseinheit gemäss der Erfindung kommt bevorzugt bei der Raumbelüftung zur Anwendung. Die Funktionseinheit eignet sich besonders für Niederdrucl<anwendungen, bei welchen ein Lüftungsstrom im Normalbetrieb einen Druck zum Beispiel in der Grössenordnung von etwa 200 Pa aufweist und im Störungsfall ein Druck zum Beispiel im Bereich ab etwa 300 Pa liegt. Ganz allgemein eignet sich die Erfindung besonders für Anwendungen, bei denen im Normalbetrieb der Druckverlust im Ventil maximal 600 Pa beträgt.

Nachfolgend werden besondere Ausführungsformen beschrieben. Die Merkmale sind somit optional.

### Option "federnde Ventilklappe":

In einer bevorzugten Ausführungsform ist die Ventilklappe federnd in die Schliessstellung auslenkbar. Die Ventilklappe ist dabei bevorzugt derart federnd auslenkbar, dass eine Rückstellkraft auf die Ventilklappe ausgeübt wird, welche diese von einer ausgelenkten Stellung, insbesondere der Schliessstellung, in die Offenstellung zurücl<stellt. Auf diese Weise kann erreicht werden, dass die mechanische Funktionseinheit nach einem Übergang in den Störungsfall automatisch wieder in die Offenstellung zurückversetzt wird, sobald die Bedingungen für den Störungsfall nicht mehr erfüllt sind. Die federnd auslenkbare Ventilklappe kann erreicht werden, indem die Ventilklappe beispielsweise zumindest bereichsweise oder gesamthaft federelastisch biegsam ausgebildet ist. Ebenso kann die Ventilklappe starr ausgebildet sein und über ein federbeaufschlagtes Scharnier oder Gelenk auslenkbar sein. Selbstverständlich sind auch Kombinationen von federbeaufschlagten Gelenken und federelastisch ausgebildeten Ventilklappen denkbar.

Alternativ kann die Ventilklappe zumindest bereichsweise plastisch deformierbar ausgebildet sein, sodass die Ventilklappe im Zuge des Auslenkens bleibend verformt wird und nach einem Störungsfall in der Schliessstellung verbleibt. Derartige Funktionseinheiten erfordern nach einem Störungsfall allerdings Unterhaltsarbeiten bzw. einen Austausch der Ventilklappe.

### Option "Fussbereich in Sperrrichtung":

Bevorzugt ist die Ventilklappe mit einem in Sperrrichtung gerichteten Fussbereich im Strömungskanal befestigt ist und erstreckt sich vom Fussbereich entgegen der Sperrrichtung. Sobald die Ventilklappe im Störungsfall durch den Überdruck im Stauraum zumindest bereichsweise in den Durchströmbereich ausgelenkt wird, weist die Ventilklappe zumindest bereichsweise einen gewissen Anstellwinkel bezüglich der Strömungsrichtung auf und kann somit von einer mit der eingehenden Stosswelle assoziierten Anströmung erfasst werden. Aufgrund der damit verbundenen Umlenkung eines Anteils der Anströmung an der Ventilklappe wird eine zusätzliche Kraft auf die Ventilklappe erzeugt, welche den Übergang in die Schliessstellung unterstützt bzw. beschleunigt.

### Option "Ventilklappe federelastisch":

In einer bevorzugten Ausführungsform ist der Fussbereich der Ventilklappe fest im Strömungskanal befestigt und die Ventilklappe ist zumindest bereichsweise biegsam ausgebildet. Die Auslenkbarkeit der Ventilklappe wird in diesem Fall durch die Biegsamkeit erreicht. Dies hat den Vorteil, dass die Auslenkbarkeit der Ventilklappe keine beweglichen Teile erfordert, welche gewartet werden müssen und mit der Zeit z.B. aufgrund Verschmutzung oder Korrosion an Funktionalität einbüssen können. Wie erwähnt ist die Ventilklappe in einer bevorzugten Ausführungsform federelastisch biegsam ausgebildet, sodass sie nach einem Störungsfall automatisch in die Offenstellung zurückgestellt wird.

### Option "Ventilklappe gelenkig im Fussbereich":

Alternativ, und je nach Anforderung ebenfalls bevorzugt, kann der Fussbereich der Ventilklappe gelenkig im Strömungskanal befestigt sein. In diesem Fall kann die gesamte Ventilklappe um das Gelenkt ausgelenkt werden. Dies hat den Vorteil, dass die Ventilklappe starr ausgebildet sein kann und damit eine robuste Konstruktion möglich ist. Eine Befestigung über ein Gelenk schliesst jedoch nicht aus, dass die Ventilklappe zudem biegsam, insbesondere federelastisch biegsam sein kann. Wie erwähnt ist die Ventilklappe bevorzugt federnd gelenkig befestigt, d.h. das Gelenk ist federbeaufschlagt, um die Ventilklappe nach einem Störungsfall automatisch in die Offenstellung zurückzustellen.

### Option: "Schliesskante an freiem Ende der Ventilklappe":

Bevorzugt weist die Ventilklappe an einem entgegen der Sperrrichtung weisenden freien Ende eine Schliesskante auf, mit welcher sie in der Schliessstellung an einer Begrenzungswand des Durchströmbereichs anliegt. Die Begrenzungswand, an welcher die Ventilklappe in der Schliessstellung anliegt, liegt in der Regel bezüglich des Durchströmbereichs der Ventilklappe gegenüber, wenn sich diese in der Offenstellung befindet. Die Schliessl<annte bildet dabei eine definierte Anlagefläche der Ventilklappe zur Anlage an der Begrenzungswand. Die Schliesskante kann z.B. durch einen abgewinkelten Bereich am freien Ende der Ventilklappe ausgebildet sein, mit welchem die Ventilklappe in der geneigten Schliessstellung zur besseren Abdichtung flächig an der Begrenzungswand anliegt. Der abgewinkelte Bereich kann auch zu einer Versteifung des freien Endes der Ventilklappe beitragen.

Anstelle der oder zusätzlich zu der Schliesskante an der Ventilklappe kann auch ein Sitz an der Begrenzungswand ausgebildet sein, in welchem die Schliesskante zur besseren Abdichtung in der Schliessstellung angeordnet ist.

### Option "Ventilklappe zum Stauraum hin federnd vorgespannt":

In einer bevorzugten Ausführungsform ist die Ventilklappe in der Offenstellung zum Stauraum hin federnd vorgespannt, wobei wenigstens ein Anschlagselement, insbesondere im Stauraum, ausgebildet ist, an welchem die Ventilklappe in der Offenstellung anliegt. In der Offenstellung wird die Ventilklappe somit von der federnden Vorspannung gegen das Anschlagelement gedrückt. Das Anschlagselement ist derart ausgebildet, dass die Ventilklappe in Strömungsrichtung ausgerichtet ist, wenn sie in der Offenstellung daran anliegt. Das Anschlagselement verhindert, dass die Ventilklappe aus der Offenstellung in den Stauraum ausgelenkt werden kann.

Das Anschlagselement kann eine in Strömungsrichtung ausgerichtete Anschlagsrippe mit einer Anschlagskante umfassen, an welcher die Ventilklappe anliegt. Ebenso sind stiftartige oder blockartige Elemente denkbar, welche verhindern, dass die Ventilklappe in den Stauraum ausgelenkt werden kann. Das Anschlagselement kann z.B. an einer Begrenzungswand oder an einem Träger befestigt sein, an welchem die Ventilklappe befestigt ist (siehe unten).

Die federnde Vorspannung bewirkt, dass eine Federkraft auf die Ventilklappe zum Stauraum hin wirkt. Die Funktionseinheit kann ein zusätzliches Federelement umfassen oder, sofern vorhanden, kann dasselbe Federelement die Federbelastung zum Stauraum hin aufbringen, welches das federnde Auslenken der Ventilklappe in den Durchströmbereich ermöglicht. Ebenso kann im Falle einer federelastisch biegsamen Ventilklappe diese selbst derart ausgebildet sein, dass in der Offenstellung eine Federkraft zum Stauraum hin wirkt. Hierzu kann die Ventilklappe zum Beispiel derart zum Stauraum hin abgewinkelt ausgebildet sein, dass sie in entspanntem Zustand, das heisst falls das Anschlagselement nicht vorhanden wäre, zumindest abschnittweise in den Stauraum hinein ausgelenkt ist. Insbesondere kann die Ventilklappe hierzu am Fussbereich zum Stauraum hin abgewinkelt sein.

Indem die Ventilklappe bei dieser besonderen Ausführungsform zum Stauraum hin federnd vorgespannt ist und in der Offenstellung an dem Anschlagselement anliegt, ist die Ventilklappe nicht vollständig frei und es kann verhindert werden, dass die Ventilklappe während des Normalbetriebs vom Lüftungsstrom in unerwünschte Schwingungen versetzt oder in den Stauraum ausgelenkt wird. Die Federbelastung kann dabei an die konkreten Bedingungen des Luftstroms angepasst sein.

### Option "mindestens zwei Stützrippen":

Im Zuge eines Störungsfalls z.B. bei einer eingehenden Druck- oder Stosswelle können beträchtliche Kräfte auf die Ventilklappe wirken. Bevorzugt umfasst die mechanische Funktionseinheit daher wenigstens zwei in Strömungsrichtung ausgerichtete und im Durchströmbereich angeordnete Stützrippen, welche jeweils wenigstens eine Auflagekante für die Ventilklappe aufweisen und an welchen die Ventilklappe in der Schliessstellung anliegen kann. Die Auflagekanten sind dabei bevorzugt in Richtung der Breite nebeneinander in einem Abstand zueinander angeordnet und derart ausgebildet, dass sie die Ventilklappe in der Schliessstellung entgegen der Sperrrichtung unterstützen. Die Ventilklappe liegt dabei in der Schliessstellung bevorzugt mit einer ihrer Hauptflächen auf den Auflagekanten auf.

Je nach Breite des Durchströmbereichs kann es dabei vorteilhaft sein, wenigstens 4 oder wenigstens 8 Stützrippen vorzusehen, um eine ausreichende Unterstützung der Ventilklappe über die gesamte Breite sicherzustellen. Bevorzugt weisen die Stützrippen dabei einen konstanten Abstand in Richtung der Breite auf. Weiter bevorzugt sind die Stützrippen paarweise über eine Befestigungsbrücl<e, insbesondere im Querschnitt U-förmig, miteinander verbunden ausgebildet, womit jeweils zwei Stützrippen über die eine Befestigungsbrücke im Strömungskanal montiert werden können. Zudem wird durch die paarweise verbundenen Stützrippen eine strukturelle Stabilität der Stützrippen erhöht. Benachbarte paarweise verbundene Stützrippenpaare können an den angrenzenden Stützrippen, z.B. mit einer stabilisierenden Zwischenlage, miteinander verschraubt sein, um die strukturelle Stabilität weiter zu erhöhen. Die über die Befestigungsbrücke verbundenen Stützrippenpaare können z.B. als ein Stanz-Biegeteil aus einem Blech, insbesondere einem Edelstahlblech gefertigt sein.

Es versteht sich, dass insbesondere bei geringeren Baugrössen nur eine einzelne Stützrippe oder gar keine Stützrippe vorhanden zu sein braucht oder, im Falle besonders breiter Ventilklappen, mehr als 8 Stützrippen vorteilhaft sein können.

### Option "Auflagekanten der Stützrippen geneigt":

Es hat sich gezeigt, dass die Ventilklappe in der Schliessstellung mit Vorteil in Sperrrichtung gegenüber der Strömungsrichtung geneigt ist, um im Störungsfall die aufgrund einer eingehenden Stosswelle wirkenden Kräfte besonders gut aufnehmen zu können. Mit Vorteil sind die Auflagekanten der Stützrippen daher in Sperrrichtung ebenfalls gegenüber der Strömungsrichtung geneigt. Auf diese Weise können die Auflagekanten die in den Durchströmbereich ausgelenkte Ventilklappe optimal in der geneigten Schliessstellung unterstützen. Bevorzugt beträgt der Neigungswinkel der Auflagekanten dabei weniger als 45°, vorzugsweise weniger als 30°, womit die Ventilklappe in der Schliessstellung in einer besonders widerstandsfähigen Ausrichtung unterstützt wird. Bevorzugt verlaufen die Auflagekanten bis an eine Begrenzungswand des Durchströmbereichs heran, welche der Ventilklappe bezüglich des Durchströmbereichs gegenüberliegt, wenn sich die Ventilklappe in der Offenstellung befindet.

### Option "stetig zunehmender Neigungswinkel der Auflagekante:

Besonders bei biegsam ausgebildeten Ventilklappen ist es vorteilhaft, wenn die Auflagekanten mit stetig zunehmendem Neigungswinkel gegenüber der Strömungsrichtung gekrümmt verlaufen. Insbesondere eine biegsame Ventilklappe kann sich somit beim Übergang in die Schliessstellung vom Fussbereich bis zum freien Ende mit stromaufwärts zunehmender Neigung an die Auflagekanten anlegen. Aufgrund der Krümmung kann eine gleichmässige Anlage erreicht werden, ohne dass die biegsame Ventilklappe knickt. Insbesondere bei federelastisch ausgebildeten Ventilklappen kann somit verhindert werden, dass im Störungsfall ein Elastizitätsbereich überstiegen und die Ventilklappe plastisch deformiert wird.

### Option "Länge Ventilklappe mindesten zweimal Höhe Durchströmbereich":

Weiter bevorzugt ist eine Ausführungsform, bei welcher die Ventilklappe eine Länge in Strömungsrichtung aufweist, welche wenigstens doppelt so gross ist, wie eine Höhe des Durchströmbereichs. Die Höhe des Durchströmbereichs bezeichnet hierbei die grösste senkrechte Distanz zwischen der Ventilklappe in der Offenstellung und einer gegenüberliegenden Begrenzungswand des Durchströmbereichs. Mit der bezüglich der Höhe des Durchströmbereichs wenigstens doppelt so grossen Länge der Ventilklappe wird erreicht, dass eine verhältnismässig geringe Auslenkung erforderlich ist, um den Durchströmbereich vollständig zu verschliessen. Insbesondere ist bei biegungsfreier Auslenkung der Ventilklappe aus einer direkt an den Durchströmbereich angrenzenden Offenstellung aufgrund der doppelt so grossen Länge nur ein Neigungswinkel von etwa 30° gegenüber der Strömungsrichtung erforderlich, um den Durchströmbereich vollständig zu verschliessen. Zudem kann aufgrund der vergleichsweise grossen Länge der Ventilklappe bei gegebener Höhe des Durchströmbereichs eine Fläche der Ventilklappe, auf welche der im Stauraum aufbaubare Überdruck wirkt, für eine grosse Kraftwirkung verhältnismässig gross gestaltet werden.

### Option "Ventilklappe als Begrenzungswand des Stauraums":

Damit der sich im Störungsfall im Stauraum aufbauende Druck auf einfache Weise und möglichst direkt auf die Ventilklappe wirkt, bildet die Ventilklappe in einer bevorzugten Ausführungsform, insbesondere in der Offenstellung, eine Begrenzungswand des Stauraums. Vorzugsweise bildet die Ventilklappe dabei eine dem Durchströmbereich zugewandte Begrenzungswand des Stauraums und vorzugsweise gleichzeitig eine dem Stauraum zugewandte Begrenzungswand des Durchströmbereichs. Auf diese Weise kann der im Stauraum aufbaubare Überdruck direkt auf eine der Hauptflächen der Ventilklappe wirken und somit eine direkte Kraft ausüben, welche die Ventilklappe in den Durchströmbereich drückt. Die weiteren Begrenzungswände des Stauraums können z.B. durch Begrenzungswände des Strömungskanals oder durch separate Wandelemente gebildet werden und sind bevorzugt starr und unveränderlich ausgebildet. Die Ventilklappe bildet in diesem Fall eine veränderliche Begrenzungswand des Stauraums, dessen Stauvolumen sich während des Auslenkens der Ventilklappe, d.h. beim Übergang von der Offenstellung in die Schliessstellung ändert.

### Option "Geometrie Stauraum und Ventilklappe":

Um eine möglichst grosse Kraftwirkung auf die Ventilklappe zu entfalten, erstreckt sich der Stauraum gemäss einer bevorzugten Ausführungsform quer zur Strömungsrichtung im Wesentlichen über die gesamte Breite der Ventilklappe. Auf dieses Weise kann die aus dem sich im Stauraum aufbaubaren Überdruck resultierende Kraft über die gesamte Breite der Ventilklappe wirken. Aus denselben Gründen ist es auch von Vorteil, wenn sich der Stauraum in Strömungsrichtung im Wesentlichen über die gesamte Länge der Ventilklappe erstreckt. Auf diese Weise kann die auf die Ventilklappe wirkende Kraft maximiert werden. Es versteht sich jedoch, dass der Stauraum grundsätzlich auch weniger breit bzw. weniger lang als die Ventilklappe ausgebildet sein kann, falls z.B. der in einem Störungsfall zu erwartenden Druckanstieg zu einer übermässigen Kraftwirkung führen würde, wenn er auf die gesamte Hauptfläche der Ventilklappe wirken würde.

### Option "Ventilklappe über ganze Breite des Durchströmbereichs":

In einer bevorzugten Ausführungsform erstreckt sich die Ventilklappe quer zur Strömungsrichtung im Wesentlichen über eine gesamte Breite des Durchströmbereichs. Auf diese Weise kann sichergestellt werden, dass der Durchströmbereich von der Ventilklappe vollständig verschlossen werden kann. Bevorzugt erstrecken sich die Ventilklappe und insbesondere auch der Durchströmbereich über die gesamte Breite des Strömungskanals. Auf diese Weise kann der Strömungskanal optimal ausgenutzt werden, was letztlich eine kompakte Baugrösse der Funktionseinheit ermöglicht.

### Option "Stauraum hat geringere Höhe als Durchströmbereich":

In einer bevorzugten Ausführungsform weist der Stauraum eine geringere Höhe auf, als der Durchströmbereich. Auf diese Weise kann bei einem gegebenen Querschnitt des Strömungskanals der effektive Querschnitt des Durchströmbereichs verhältnismässig gross sein, während der Stauraum nur einen geringen Anteil des Eingangsquerschnitts des Strömungskanals in Anspruch nimmt.

### Option "Strömungsrichtung und Sperrrichtung gleichgerichtet":

In einer bevorzugten Ausführungsform der Funktionseinheit ist in einem vorgesehenen Betrieb die Strömungsrichtung der Sperrrichtung gleichgerichtet. In diesem Fall ist der Durchgang einer Druck- oder Stosswelle in Richtung des strömenden Luftstroms blockierbar, sodass die Funktionseinheit zur Anwendung im Sinne eines Druckventils geeignet ist.

### Option "Strömungsrichtung und Sperrrichtung entgegengerichtet":

Alternativ und je nach Anwendung ebenso bevorzugt ist in einem vorgesehene Betrieb die Strömungsrichtung der Sperrrichtung entgegengerichtet. In diesem Fall ist der Durchgang einer Druck- oder Stosswelle entgegen der Richtung des strömenden Luftstroms blockierbar, sodass die Funktionseinheit zur Anwendung im Sinne eines Rückschlagventils geeignet ist.

### Option "Integration der mechanischen Einheit in Stosswellenschutzventil"

Die Erfindung betrifft auch ein Stosswellenschutzventil für Lüftungsanlagen umfassend wenigstens eine mechanische Funktionseinheit, die als eingangs als Lösung der Aufgabe definiert ist und die weitere optionale Merkmale aufweisen kann.

### Option "Gehäuse begrenzt Strömungskanal":

Im Stosswellenschutzventil ist die wenigstens eine Funktionseinheit bevorzugt in einem Gehäuse mit zwei Luftstromöffnungen angeordnet, welche durch den Strömungskanal der wenigstens einen Funktionseinheit verbunden sind. Das Gehäuse ist mit Vorteil als Kanaleinbaukomponente zum Einbau in einen Lüftungskanal eines Belüftungssystems vorgesehen. Das Stosswellenschutzventil kann dabei mit einer oder beiden Luftstromöffnungen an den Lüftungskanal angeschlossen oder in diesen eingesetzt werden, womit der Lüftungsstrom den Strömungskanal der wenigstens einen Funktionseinheit anströmen und den Durchströmbereich durchströmen kann. Zum Anschluss an den Lüftungskanal weist das Gehäuse im Bereich einer oder beider Luftstromöffnungen bevorzugt Befestigungsmittel wie z.B. Befestigungsflansche oder -laschen für Verschraubungen auf. Das Gehäuse kann dabei gemäss einschlägigen Normen ausgebildet sein, um in bestehende normierte Belüftungssysteme integriert werden zu können. Das Gehäuse kann zudem den Strömungskanal der wenigstens einen Funktionseinheit und gegebenenfalls auch deren Durchströmbereich zumindest teilweise begrenzen, was eine vereinfachte Konstruktion ermöglicht.

### Option: "zwei parallele Funktionseinheiten":

In einer bevorzugten Ausführungsform umfasst das Stosswellenschutzventil wenigstens eine weitere, gleichartige Funktionseinheit, welche parallel zur wenigstens einen Funktionseinheit angeordnet ist. Indem wenigstens eine weitere gleichartige Funktionseinheit parallel zur wenigstens einen Funktionseinheit im Stosswellenschutzventil angeordnet ist, kann ein in das Stosswellenschutzventil eintretender Lüftungsstrom beide Strömungskanäle der Funktionseinheiten anströmen. Auf diese Weise kann z.B. ein Strömungswiderstand des Stosswellenschutzventils verringert werden. Zudem können die Funktionseinheiten z.B. als Module ausgebildet sein, sodass das Stosswellenventil einfach skalierbar und an unterschiedliche Bedürfnisse anpassbar ist. Insbesondere können auch mehr als zwei gleichartige Funktionseinheiten in paralleler Anordnung vorgesehen sein.

### Option "Funktionseinheiten mit gemeinsamem Stauraum":

Bei zwei oder mehr parallel angeordneten Funktionseinheiten können auch konstruktive Synergien genutzt werden. Beispielsweise bilden in einer bevorzugten Ausführungsform des Stosswellenschutzventils die Stauräume der wenigstens einen und der wenigstens einen weiteren Funktionseinheit einen gemeinsamen Stauraum, welcher zwischen den Ventilklappen der wenigstens einen und der wenigstens einen weiteren Funktionseinheit angeordnet ist. Auf diese Weise kann eine kompakte Bauweise erreicht werden, da nur ein Stauraum erforderlich ist, um die Ventilklappen zweier Funktionseinheiten in die jeweiligen Durchströmbereiche auszulenken. Bevorzugt begrenzen die Ventilklappen den Stauraum quer zur Strömungsrichtung an zwei quer zur Strömungsrichtung gegenüberliegenden Seiten, sodass eine möglichst direkte Kraftwirkung aufgrund des im Stauraum aufbaubaren Überdrucks erreicht wird. Es versteht sich, dass auch mehr als zwei, insbesondere 4 oder 8, parallel angeordnete Funktionseinheiten im Stosswellenschutzventil vorgesehen sein können, welcher paarweise jeweils einen gemeinsamen Stauraum aufweisen. Auf dieses Weise kann die Baugrösse des Stosswellenventils kompakter gestaltet werden bzw. kann bei einer gegebenen Baugrösse ein möglichst grosser effektiver Querschnitt der zu Verfügung stehenden Durchströmbereiche bereitgestellt werden.

### Option "Ventilklappen an gemeinsamem Träger":

Weiter können bevorzugt die Ventilklappen der wenigstens einen und der wenigstens einen weiteren Funktionseinheit mit einem jeweiligen Fussbereich an einem gemeinsamen, insbesondere quer zur Strömungsrichtung zwischen den Funktionseinheiten angeordneten, Träger befestigt sein. Auf diese Weise kann Konstruktion des Stosswellenschutzventils weiter vereinfacht werden, indem Bauteile gemeinsam genutzt werden. Der gemeinsame Träger kann z.B. als Querbalken mit beispielsweise rechteckigem Querschnitt ausgebildet sein, welcher sich im Wesentlichen über die gesamte Breite durch das Gehäuse erstreckt.

### Option: "gemeinsamer Träger als Abschluss des Stauraums":

Bevorzugt bildet der gemeinsame Träger dabei auch einen Abschluss des gemeinsamen Stauraums. Hierzu weist der gemeinsame Träger eine Höhe auf, welche im Wesentlichen der Höhe des Stauraums entspricht. Die Fussbereiche der beiden Ventilklappen können dabei beispielsweise an zwei in Richtung der Höhe gegenüberliegenden Seiten des Trägers befestigt sein, sodass der Stauraum von den Ventilklappen und dem Träger begrenzt wird.

### Option "spiegelsymmetrisch angeordnete Funktionseinheiten":

Mit Vorteil ist das Stosswellenschutzventil derart gestaltet, dass der Durchgang einer Druck- oder Stosswelle in beide Richtungen längs der Strömungsrichtung blocl<ierbar ist. Hierzu ist im Stosswellenschutzventil bevorzugt zu jeder der Funktionseinheiten eine weitere, bezüglich einer Ebene quer zur Strömungsrichtung spiegelsymmetrisch ausgebildete und in Serie angeschlossene weitere Funktionseinheit vorhanden. Dabei schliessen bevorzugt die Durchströmbereiche jedes Paares von seriell angeschlossenen Funktionseinheiten miteinander kommunizierend und vollständig überlappend aneinander an und bilden einen durchgehenden Durchströmbereich. Aufgrund der spiegelsymmetrischen Ausbildung der Funktionseinheiten sind die Sperrrichtungen der seriell angeschlossenen Funktionseinheiten einander entgegengesetzt. Die seriell angeschlossenen Funktionseinheiten werden im Betrieb jedoch in derselben vorgesehenen Strömungsrichtung vom Luftstrom durchströmt.

### Option "Serielle Funktionseinheiten mit durchgehenden Stützrippen":

Auch im Falle der seriell angeschlossenen Paare von Funktionseinheiten können konstruktiv Synergien genutzt werden. Beispielsweise weist jedes Paar von seriell aneinander angeschlossenen Funktionseinheiten bevorzugt wenigstens 2, insbesondere wenigstens 4, vorzugsweise wenigstens 8, gemeinsame, in Strömungsrichtung durchgehende Stützrippen auf, welche jeweils Auflagekanten für die Ventilklappen der Funktionseinheiten des Paares aufweisen. Auf diese Weise können die Stützrippen des Paares von Funktionseinheiten z.B. als durchgehende Leitflächen ausgebildet sein, was die Konstruktion vereinfacht. Die durchgehenden Stützrippen können wie oben erwähnt paarweise über eine Befestigungsbrücke, insbesondere U-förmig, miteinander verbunden ausgebildet sein, womit jeweils zwei durchgehende Stützrippen über die eine Befestigungsbrücke im Strömungskanal montiert werden können. Bevorzugt sind die Stützrippen dabei an dem oben erwähnten gemeinsamen Träger befestigt, an welchem auch die Ventilklappen der parallel angeordneten Funktionseinheiten befestigt sind. Die paarweise über die Befestigungsbrücke verbundenen, durchgehenden Stützrippen können auch in diesem Fall als ein Stanz-Biegeteil aus einem Blech, insbesondere einem Edelstahlblech gefertigt sein.

### Option "durchgehendes Blech als Ventilklappe serieller Funktionseinheiten":

In einer weiter bevorzugten Ausführungsform sind die Ventilklappen jedes Paares von seriell angeschlossenen Funktionseinheiten als gemeinsames, in Strömungsrichtung durchgehendes Blatt, insbesondere als ein durchgehendes Blech, vorzugsweise ein Edelstahlblech, ausgebildet. Die in diesem Fall biegsam, insbesondere federelastisch biegsam, ausgebildeten Ventilklappen können somit auf einfache Weise einstückig gefertigt werden. Ein in Längsrichtung zentraler Bereich des durchgehenden Blechs kann einen gemeinsamen Fussbereich der beiden Ventilklappen bilden, von welchem sich die Ventilklappen in entgegengesetzte Richtungen längs der Strömungsrichtung erstrecken. Bevorzugt ist der gemeinsame Fussbereich dabei an dem oben erwähnten gemeinsamen Träger befestigt, an welchem auch die Ventilklappen der parallel angeordneten Funktionseinheiten und/oder die durchgehenden Stützrippen befestigt sind.

### Erfindungsgemässe Lüftungsanlage:

Die Erfindung betrifft auch eine Lüftungsanlage mit wenigstens einem Lüftungskanal und wenigstens einem daran angeschlossenen Stosswellenventil wie vorliegend beschrieben. Die Lüftungsanlage kann dabei zur Raumlüftung z.B. in Wohn- oder Bürogebäuden oder als technische Lüftungsanlage z.B. als Rückkühlung, oder für Zuluft zu Dieselaggregaten, oder in Atoml<raftwerl<en, in Raffinerieanlagen oder auf Bohrinseln vorgesehen sein.

### Erfindungsgemässe Prüfanlage mit Stosswellenschutzventil:

Die Erfindung betrifft auch eine Prüfanlage mit einem Stosswellengenerator und einem Stosswellenschutzventil wie vorliegend beschrieben. Die Prüfanlage kommt bevorzugt zur Anwendung, um einen Schliessdruck und/oder einen Strömungswiderstand des Stosswellenventils zu prüfen. Die Prüfanlage umfasst bevorzugt einen Lüftungskanal, über welchen das Stosswellenschutzventil an den Stosswellengenerator angeschlossen ist. Mit dem Stosswellengenerator ist eine Stosswelle erzeugbar, welche durch den Lüftungskanal propagiert und in Sperrrichtung in das Stosswellenventil eintritt. Die Prüfanlage kann auch einen Luftstromerzeuger aufweisen, welcher einen Luftstrom im Lüftungskanal erzeugt, der durch das Stosswellenventil strömt und einem vorgesehenen Normalbetrieb entspricht. Weiter weist die Prüfanlage bevorzugt einen oder mehrere Sensoren auf, mit welchen ein Druckabfall am Stosswellenschutzventil gemessen werden kann. Bevorzugt ist hierzu stromaufwärts und stromabwärts vom Stosswellenschutzventil jeweils wenigstens ein Drucksensor vorhanden. Mit einer bevorzugt vorhandenen Auswertungseinheit können von den Sensoren ermittelte Messwerte ausgewertet werden und beispielsweise mit vorgegebenen oder im Normalbetrieb ermittelten Werten verglichen werden, um festzustellen, ob das Stosswellenschutzventil im Störungsfall wie vorgesehen schliesst. Die Auswertungseinheit kann hierfür dazu ausgebildet sein, aus im Normalbetrieb ermittelten Messwerten einen Strömungswiderstand des Stosswellenschutzventils zu ermitteln und den ermittelten Strömungswiderstand als Vergleichswert für einen Strömungswiderstand im Störungsfall zu benutzen.

### Erfindungsgemässes Messverfahren für Stosswellenschutzventil:

Die Erfindung betrifft auch ein Verfahren zum Messen eines Schliessdrucks und/oder eines Strömungswiderstandes eines Stosswellenschutzventils wie vorliegend beschrieben. Das Verfahren umfasst die Schritte:
a) Einsetzen des Stosswellenschutzventils in einen Stosswellenrohr;
b) Erzeugen eines konstanten Luftstroms im Stosswellenrohr;
c) Bestimmung eines Messwertes des Luftstroms;
d) Erzeugen einer Stosswelle im Stosswellenrohr;
e) Bestimmung eines Messwertes für den Druckabfall;
f) Vergleichen der Messwerte mit vorgegebenen Werten um festzustellen, ob das Stosswellenschutzventil schliesst.

Bevorzugt wird das erfindungsgemässe Verfahren auf einer erfindungsgemässen Prüfanlage ausgeführt.

### Erfindungsgemässe Verwendung des Stosswellenschutzventils:

Die Erfindung betrifft auch die Verwendung eines Stosswellenschutzventils wie vorliegend beschrieben in einem Prüflabor für Explosionsschutz-Bestimmungen. Die Verwendung in einem Prüflabor für Explosionsschutz-Bestimmungen kann die Verwendung einer erfindungsgemässen Prüfanlage wie vorliegend beschrieben umfassen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen schematisch:
- Fig. 1: eine Querschnittsansicht einer passiv arbeitenden mechanischen Funktionseinheit gemäss der Erfindung für ein Stosswellenschutzventil mit einer Ventilklappe in einer Offenstellung;
- Fig. 2: eine Draufsicht auf die Funktionseinheit der Fig. 1 mit Blickrichtung in einer Sperrrichtung X;
- Fig. 3: die Funktionseinheit der Fig. 1 in einem Störungsfall, in welchem eine starr ausgebildete Ventilklappe in eine Schliessstellung ausgelenkt ist;
- Fig. 4: die Funktionseinheit der Fig. 1 in einem Störungsfall, in welchem eine federelastisch biegsam ausgebildete Ventilklappe in eine Schliessstellung ausgelenkt ist;
- Fig. 5: eine erfindungsgemässe Funktionseinheit mit einer federelastisch biegsamen Ventilklappe in eine Offenstellung mit Stützrippen zur Stützung der Ventilklappe in einer Schliessstellung;
- Fig. 6: eine Draufsicht in Sperrrichtung auf die Funktionseinheit der Fig. 5;
- Fig. 7: ein Stosswellenschutzventil gemäss der Erfindung mit zwei gleichartigen Funktionseinheiten, welche parallel zueinander angeordnete sind;
- Fig. 8: ein Stosswellenschutzventil gemäss der Erfindung, mit zwei gleichartigen Funktionseinheiten, welche seriell aneinander anschliessen;
- Fig. 9: ein Stosswellenschutzventil gemäss der Erfindung mit vier gleichartigen Funktionseinheiten, welche paarweise seriell angeschlossen und parallel angeordnet sind;
- Fig. 10: eine äussere Schrägansicht eines Stosswellenschutzventils gemäss der Erfindung mit 8 Funktionseinheiten;
- Fig. 11: eine Draufsicht in einer Sperrrichtung auf das Stosswellenschutzventil der Fig. 10;
- Fig. 12: einen Längsquerschnitt des Stosswellenschutzventils der Fig. 10 in einer Ebene parallel zu einer Längsrichtung und zu einer Breitenrichtung;
- Fig. 13: einen Längsquerschnitt in einer Ebene parallel zu einer Längsrichtung und einer Höhenrichtung des Stosswellenschutzventils der Fig. 10;
- Fig. 14: eine äussere Seitenansicht des Stosswellenschutzventils der Fig. 10;
- Fig. 15: eine Anordnung von zwei über jeweils eine Befestigungsbrücke verbundenen Stützrippenpaaren mit geradlinigen Auflagekanten;
- Fig. 16: eine Anordnung von zwei über jeweils eine Befestigungsbrücke verbundenen Stützrippenpaaren mit gekrümmten Auflagekanten;
- Fig. 17: eine Anordnung von drei über jeweils eine Befestigungsbrücke verbundenen Stützrippenpaaren gemäss der Fig. 16;
- Fig. 18: eine Querschnittsansicht einer passiv arbeitenden mechanischen Funktionseinheit gemäss der Erfindung für ein Stosswellenschutzventil mit einer Ventilklappe in einer Offenstellung;
- Fig. 19: eine Draufsicht auf die Funktionseinheit der Fig. 18 mit Blickrichtung in einer Sperrrichtung X.

Grundsätzlich sind in den Figuren gleiche Teile mit gleichen Bezugszeichen versehen.

### Wege zur Ausführung der Erfindung

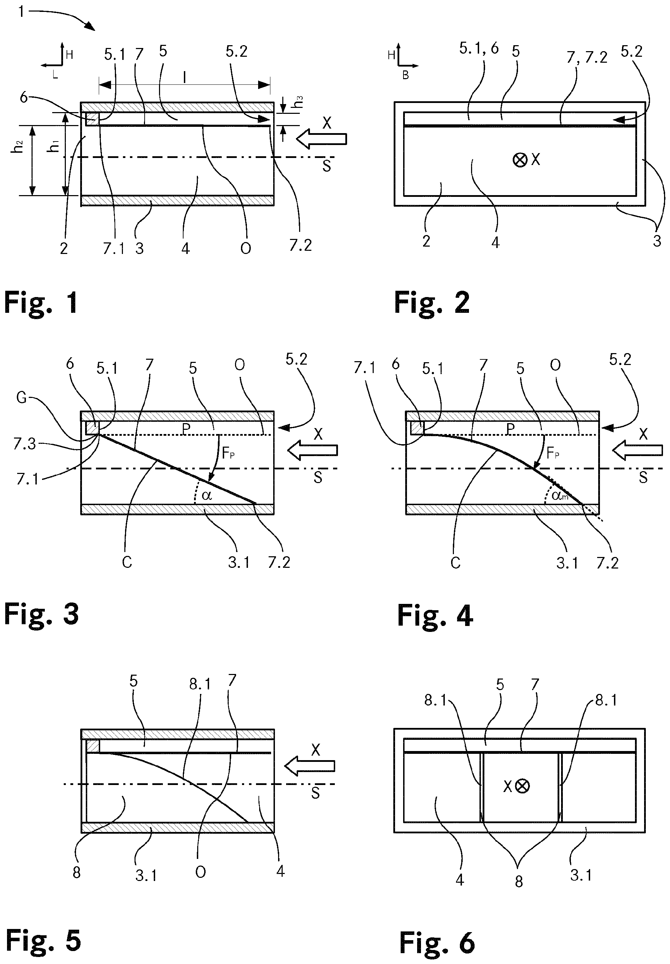

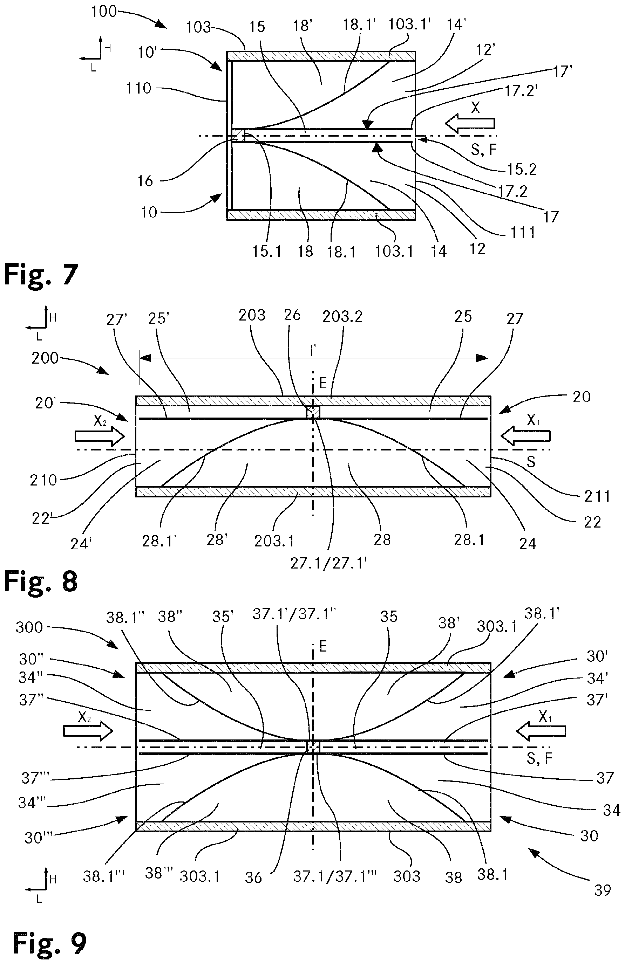

Figur 1 zeigt eine Querschnittsansicht einer passiv arbeitenden mechanischen Funktionseinheit 1 gemäss der Erfindung für ein Stosswellenschutzventil 100 (siehe z.B. Fig. 7) gemäss der Erfindung. Die Funktionseinheit 1 umfasst einen sich in einer Strömungsrichtung S (strichpunktierte Linie) erstreckenden Strömungskanal 2, welcher von Begrenzungswänden 3 definiert ist. Die Begrenzungswände 3 können dabei einen Teil der Funktionseinheit 1 bilden oder können z.B. von einem Gehäuse 103 des Stosswellenschutzventils 100 bereitgestellt werden (siehe Fig. 7), in welchem die Funktionseinheit 1 angeordnet ist. Die Strömungsrichtung S entspricht einer Längsrichtung L. Im Strömungskanal 2 ist ein Durchströmbereich 4 vorhanden, durch welchen ein Lüftungsstrom strömen kann. Ebenfalls im Strömungskanal 2 ist neben dem Durchströmbereich 4 ein Stauraum 5 ausgebildet. Der Stauraum 5 ist in Längsrichtung L durch einen Abschluss 5.1 einseitig abgeschlossen und ist in entgegengesetzter Richtung an einer Eintrittsöffnung 5.2 offen. Die Eintrittsöffnung 5.2 ist einer Sperrrichtung X, in welcher der Durchgang einer Stosswelle durch die Funktionseinheit 1 blocl<ierbar ist, entgegen gerichtet. Die Sperrrichtung X bezeichnet eine Richtung parallel zur Strömungsrichtung S, in welcher eine eingehende Stosswelle propagiert. Der Abschluss 5.1 des Stauraums 5 in Sperrrichtung X ist durch einen Träger 6 gebildet, welcher sich längs einer der Begrenzungswände 3 erstreckt.

Zwischen dem Durchströmbereich 4 und dem Stauraum 5 ist eine Ventilklappe 7 angeordnet, welche sich im Wesentlichen parallel zur Strömungsrichtung S erstreckt. Die Ventilklappe 7 ist mit einem Fussbereich 7.1 am Träger 6 befestigt und erstreckt sich entgegen der Sperrrichtung X. Die Ventilklappe 7 ist in einer Offenstellung O gehalten, wobei ihre Befestigung derart beschaffen ist, dass die Ventilklappe 7 in Abwesenheit von äusseren Kräften in der Offenstellung O verbleibt.

Ein freies Ende 7.2 der Ventilklappe 7 ist bei der Eingangsöffnung 5.2 des Stauraums 5 angeordnet. Die Ventilklappe 7 begrenzt den Stauraum 5 zum Durchströmbereich 4 hin in einer Richtung quer zur Strömungsrichtung S, welche vorliegend als Höhenrichtung H bezeichnet wird und durch diejenige Richtung quer zur Strömungsrichtung S bzw. der Längsrichtung L definiert ist, in welcher der Durchströmbereich 4, die Ventilklappe 7 und der Stauraum 5 übereinander angeordnet sind. Der Durchströmbereich 4 ist in beide Richtungen von S frei durchströmbar.

Der Strömungskanal 2 weist eine Höhe h₁ in Richtung von H auf. Der Stauraum 5 weist eine Höhe h₃ auf, welche im Wesentlichen durch den Träger 6 vorgegeben ist. Der Träger 6 schliesst in einer Richtung entgegen der Richtung H mit der Ventilklappe 4 ab, d.h. er erstreckt sich nicht über die Ventilklappe 7 hinaus in den Durchströmbereich 4. Die Eingangsöffnung 5.2 des Stauraums 5 weist ebenfalls eine Höhe h₃ auf. Der Durchströmbereich 4 weist eine Höhe h₂ auf, welche deutlich grösser als die Höhe h₃ des Stauraums 5 ist. Bevorzugt ist eine Länge l der Ventilklappe 7 in Längsrichtung L wenigstens doppelt so gross wie die Höhe h₂ des Durchströmbereichs 4.

Figur 2 zeigt schematisch eine Draufsicht auf die Funktionseinheit 1 mit Blickrichtung in Sperrrichtung X. Die Begrenzungswände 3 begrenzen die Funktionseinheit 1 in alle Richtungen quer zur Strömungsrichtung S. Die Ventilklappe 7 trennt den Stauraum 5 gegenüber dem Durchströmbereich 4 im Strömungskanal 2 ab. Während der Durchströmbereich 4 in Strömungsrichtung S in beide Richtungen frei durchströmbar ist, ist der Stauraum 5 durch den vom Träger 6 gebildeten Abschluss 5.1 in Sperrrichtung X abgeschlossen.

Die Ventilklappe 7 erstreckt sich durch den gesamten Strömungskanal 2 in einer Richtung senkrecht zur Strömungsrichtung S, welche auch senkrecht auf H steht. Diese Richtung wird vorliegend als Breitenrichtung B bezeichnet. Die Ventilklappe 7 unterteilt somit den gesamten Strömungskanal 2 in den Durchströmbereich 4 und den Stauraum 5. Ein Querschnitt quer zur Strömungsrichtung S des Strömungskanals 2 ist somit im Wesentlichen vollständig von den Querschnitten des Durchströmbereichs 4 und Stauraums 5 überdeckt, abgesehen von der Stirnfläche des freien Endes 7.2 der Ventilklappe 7. In Breitenrichtung B ist der Stauraum 5 von den in Breitenrichtung B angeordneten Begrenzungswänden 3 begrenzt und abgeschlossen.

Figur 3 zeigt die Funktionseinheit 1 in einem Störungsfall, in welchem die Ventilklappe 7 aufgrund einer in Sperrrichtung X eingehenden Stosswelle in den Durchströmbereich 4 in eine Schliessstellung C ausgelenkt ist.

In der Ausführungsform der Fig. 3 ist die Ventilklappe 7 über ein Gelenk 7.3 mit ihrem Fussbereich 7.1 am Träger 6 befestigt und starr ausgebildet. Das Gelenk 7.3 ist dabei derart federbeaufschlagt (nicht gezeigt) ausgebildet, dass die Ventilklappe 7 einerseits in der Offenstellung O gehalten ist, wenn kein Störungsfall vorliegt (siehe Fig. 1), und andererseits aus der Schliessstellung C in die Offenstellung O zurückgestellt wird, nachdem der Störungsfall vorüber ist.

In der Schliessstellung C ist die Ventilklappe 7 um die quer zur Strömungsrichtung S, in Breitenrichtung B angeordnete Gelenkachse G in die Schliessstellung C ausgeschwenkt. Das freie Ende 7.2 der Ventilklappe 7 liegt an einer der Offenstellung O bezüglich des Durchströmbereichs 4 gegenüberliegenden Begrenzungswand 3.1 an. Die Ventilklappe 7 ist somit um einen im Wesentlichen konstanten Winkel α bezüglich der Strömungsrichtung S geneigt (vorbehaltlich einer allfälligen Durchbiegung aufgrund der Belastung). Indem die Länge I der Ventilklappe 7 bevorzugt wenigstens etwa doppelt so gross wie die Höhe h₂ des Durchströmbereichs 4 ist, beträgt der Winkel α nicht mehr als etwa 30°.

Die Ventilklappe 7 verschliesst somit den Durchströmbereich 4 über seinen gesamten Querschnitt und bildet zusammen mit dem Abschluss 5.1 des Stauraums 5 einen vollständigen Verschluss des Strömungskanals 2. Ein Durchgang der Stosswelle in Sperrrichtung X durch die Funktionseinheit 1 ist somit blockiert.

Die Auslenkung der Ventilklappe 7 aus der Offenstellung O erfolgt aufgrund eines sich infolge der eingehenden Stosswelle aufbauenden Überdrucks P im Stauraum 5. Der Überdruck P ergibt sich aus einer mit der eingehenden Stosswelle assoziierten Anströmung der Eintrittsöffnung 5.2 des Stauraums 5. Durch den dynamischen Druck der Anströmung kann sich aufgrund des Abschlusses 5.1 in Sperrrichtung X im seitlich von den Begrenzungswänden 3 abgeschlossenen Stauraum 5 ein Staudruck aufbauen. Im Durchströmbereich 4 wird aufgrund derselben Anströmung hingegen kein Staudruck aufgebaut, da dieser frei durchgängig ist. Die sich ergebende Druckdifferenz zwischen Durchströmbereich 4 und Stauraum 5 ergibt den Überdruck P. Dieser Überdruck P wirkt auf eine dem Stauraum 5 zugewandte Fläche der Ventilklappe 7 und bewirkt somit eine Kraftwirkung F_{P} in einer Richtung senkrecht zur Fläche der Ventilklappe 7. Die Kraftwirkung F_{P} lenkt die Ventilklappe 7 in den Durchströmbereich 4 aus und drückt diese aus der Offenstellung O in die Schliessstellung C. Mit zunehmender Auslenkung bietet die Ventilklappe 7 zudem eine Angriffsfläche für den Anprall der mit der Stosswelle assoziierten Anströmung, was eine zusätzliche, die Auslenkung unterstützende Kraft auf die Ventilklappe 7 bewirkt.

Die in Fig. 4 dargestellte Ausführungsform der Funktionseinheit 1 zeigt eine fest, d.h. unbeweglich, mit ihrem Fussbereich 7.1 am Träger 6 befestigte Ventilklappe 7, welche federelastisch biegsam, z.B. aus einem Federstahlblech, ausgebildet ist. Liegt kein Störungsfall vor, ist die federelastische Ventilklappe 7 aufgrund ihrer Beschaffenheit wie in Fig. 1 gezeigt in Strömungsrichtung S ausgerichtet in der Offenstellung O gehalten.

Aufgrund des in Zusammenhang mit Fig. 3 beschriebenen sich aufbauenden Überdrucks P im Stauraum 5 wird die federelastische Ventilklappe 7 im Störungsfall entgegen der Federkraft quer zur Strömungsrichtung S aus der Offenstellung O in den Durchströmbereich 4 und in die Schliessstellung C gedrückt. Aufgrund der federelastischen Biegsamkeit der Ventilklappe 7 lenkt diese nicht gradlinig aus sondern krümmt sich zur gegenüberliegenden Begrenzungswand 3.1 hin. Die Krümmung nimmt dabei in der Darstellung der Fig. 4 zur Begrenzungswand 3.1 hin zu. Ein maximaler Neigungswinkel αₘ bezüglich der Strömungsrichtung S der Ventilklappe 7 wird am freien Ende 7.2 erreicht. Der Winkel αₘ beträgt bevorzugt maximal 45°, insbesondere nur maximal 30°.

Figur 5 zeigt eine weitere Ausführungsform der Funktionseinheit 1, bei welcher die Ventilklappe 7 fest, d.h. unbeweglich, mit ihrem Fussbereich 7.1 am Träger 6 befestigt und federelastisch biegsam ausgebildet ist. Die Ventilklappe 7 befindet sich in Fig. 5 in der Offenstellung O. Figur 6 zeigt eine Draufsicht in Sperrrichtung auf die Funktionseinheit der Fig. 5 und wird zusammen mit dieser beschrieben.

Zur Unterstützung der Ventilklappe 7 in der Schliessstellung C sind in der Ausführungsform der Fig. 5 zwei Stützrippen 8 im Durchströmbereich 4 angeordnet. Die Stützrippen 8 sind als Lamellen ausgebildet, welche längs der Strömungsrichtung S ausgerichtet sind und im Wesentlichen über die gesamte Länge I der Ventilklappe 7 erstrecken. Jede der Stützrippen 8 weist eine zur Ventilklappe 7 hin gerichtete Auflagekante 8.1 auf, welche sich gekrümmt zur Begrenzungswand 3.1 hin neigt. Insbesondere nimmt eine lokale Neigung der Auflagekante 8.1 gegenüber der Strömungsrichtung S zur Begrenzungswand 3.1 hin aufgrund der Krümmung zu. Wird die Ventilklappe 7 wie im Zusammenhang mit Fig. 4 beschrieben in die Schliessstellung C ausgelenkt, kommt eine dem Durchströmbereich 4 zugewandte Fläche der Ventilklappe 7 auf den Auflagekanten 8.1 zu liegen. Die Stützrippen 8.1 sind an der Begrenzungswand 3.1 abgestützt, womit die von der eingehenden Stosswelle auf die Ventilklappe 7 ausgeübten Kräfte über die Stützrippen 8.1 auf die Begrenzungswand 3.1 abgeführt werden können. Indem zwei (oder mehrere) Stützrippen 8, bevorzugt gleichmässig, voneinander beanstandet in Richtung von B nebeneinander im Durchströmbereich 4 angeordnet sind, kann zudem verhindert werden, dass die Ventilklappe 7 in der Schliessstellung C infolge der anprallenden Stosswelle übermässig deformiert wird und eindellt. Die Anzahl der Stützrippen 8 und deren Abstand werden an die Drucl<stossanforderungen angepasst.

Figur 7 zeigt ein Stosswellenschutzventil 100 gemäss der Erfindung mit einem rohrförmigen Gehäuse 103 mit einem rechteckigen Querschnitt (nicht gezeigt), in welchem zwei gleichartige Funktionseinheiten 10 und 10' parallel und spiegelsymmetrisch bezüglich einer Längsebene F zueinander angeordnete sind. Das Gehäuse 103 weist in Längsrichtung L, d.h. in Strömungsrichtung S, an jedem Längsende eine Luftstromöffnung 110 und 111 auf. Die Luftstromöffnungen 110 und 111 schliessen an Strömungskanäle 12 und 12' der Funktionseinheiten 10 und 10' an. Ein ball<enartiger Träger 16 erstreckt sich im Gehäuse 103 zwischen zwei Seitenwänden (nicht dargestellt) in Richtung der Breite B des Stosswellenschutzventils 100 bezüglich der Höhenrichtung H des Stosswellenschutzventils 100 mittig angeordnet. Der Träger 16 ist an einem in Sperrrichtung X gesehen fernen Längsende des Gehäuses 103, in Richtung von H zwischen den Funktionseinheiten 10 und 10' angeordnet. Der Träger 16 ist mit seinen Längsenden an den nicht dargestellten Seitenwänden befestigt. Sämtliche weitere Komponenten und deren Ausrichtungen der Funktionseinheiten 10 und 10' entsprechen im Wesentlichen den Komponenten der Funktionseinheit 1 der Fig. 5, wobei die Anordnungen und Ausrichtungen der Komponenten der Funktionseinheiten 10 und 10' bezüglich einer Längsebene F, in welcher sich der Träger 16 erstreckt und die längs der Strömungsrichtung S ausgerichtet ist, zueinander gespiegelt sind.

Die Ventilklappen 17 und 17' der Funktionseinheiten 10 und 10' sind mit Fussbereichen 17.1 und 17.1' in Höhenrichtung H quer zur Strömungsrichtung S, beidseitig bezüglich der Längsebene F, spiegelsymmetrisch am Träger 16 befestigt. In ihren Offenstellungen O erstrecken sich die Ventilklappen 17 und 17' in Strömungsrichtung S, weitgehend parallel zueinander, in Richtung entgegen der Sperrrichtung X. Zwischen den Ventilklappen 17 und 17' und den das Gehäuse 103 in Höhenrichtung H nach aussen begrenzenden Begrenzungswänden 103.1 und 103.1' sind Durchströmbereiche 14 und 14' der Funktionseinheiten 10 und 10' angeordnet. Lamellenartige Stützrippen 18 und 18' sind in Strömungsrichtung S ausgerichtet in den Durchströmbereichen 14 und 14' angeordnet. Ausgehend von den Fussbereichen 17.1 und 17.1' der Ventilklappen 17 und 17' weisen die Stützrippen 18 und 18' Auflagekanten 18.1 und 18.1' auf, welche sich entgegen der Sperrrichtung X zu Begrenzungswänden 103.1 und 103.1' des Gehäuses 103 hin gekrümmt erstrecken.

Ein Bereich, welcher von den Ventilklappen 17 und 17' in Höhenrichtung H und von dem Träger 16 in Sperrrichtung X begrenzt ist, bildet einen Stauraum 15, welcher entgegen der Sperrrichtung X eine in Höhenrichtung H von freien Längsenden 17.2 und 17.2' der Ventilklappen 17 und 17' begrenzte Eingangsöffnung 15.2 aufweist. Der Träger 16 bildet eine Abschluss 15.1 des Bereichs zwischen den Ventilklappen 17 und 17`.

Der Stauraum 15 bildet damit einen gemeinsamen Stauraum 15 der beiden Funktionseinheiten 10 und 10`. Aufgrund der bezüglich der Längsebene F spiegelsymmetrischen Anordnung der beiden Funktionseinheiten 10 und 10' können strukturelle Synergien genutzt werden, um gesamthaft die Baugrösse des Stosswellenventils 100 kompakter zu gestalten bzw. bei gegebener Baugrösse einen möglichst grossen effektiven Querschnitt der Durchströmbereiche 14 und 14' bereitstellen zu können. Es versteht sich, dass sich die Ventilklappen 17 und 17' sowie die Durchströmbereiche 14 und 14' in Breitenrichtung B im Wesentlichen über die gesamte Breite zwischen den nicht dargestellten Seitenwänden des Gehäuses 103 erstrecken, d.h. auch im Wesentlichen über die gesamte Breite des Trägers 16. In Breitentenrichtung B ist der Stauraum 15 somit von den nicht dargestellten Seitenwänden begrenzt und abgeschlossen.

Figur 8 zeigt ein Stosswellenschutzventil 200 mit einem rohrförmigen Gehäuse 203 mit einem rechteckigen Querschnitt (nicht gezeigt), in welchem zwei gleichartige, spiegelsymmetrisch bezüglich einer Querebene E zueinander angeordnete Funktionseinheiten 20 und 20' in Serie aneinander anschliessen sind. Das Stosswellenschutzventil 200 weist zwei einander entgegen gerichtete Sperrrichtungen X, und X₂ auf.

Das Gehäuse 203 weist in Strömungsrichtung S an jedem Längsende eine Luftstromöffnung 210 und 211 auf. Die Luftstromöffnungen 211 und 210 schliessen jeweils an ein Strömungsende von Strömungskanälen 22 respektive 22' der Funktionseinheiten 20 und 20' an. Die Strömungskanäle 22 und 22' schliessen im Gehäuse 203 mit ihrem jeweils weiteren Strömungsende aneinander an. Ein ball<enartiger Träger 26 erstreckt sich zwischen zwei gegenüberliegenden Seitenwänden (nicht dargestellt) des Gehäuses 203 an eine Begrenzungswand 203.2 des Gehäuses 203 angrenzend in Richtung der Breite B des Stosswellenschutzventils 200. Der Träger 26 ist in Längsrichtung L mittig im Gehäuse 203, in Richtung von L zwischen den Funktionseinheiten 20 und 20' angeordnet. Der Träger 26 ist mit seinen Längsenden an den nicht dargestellten Seitenwänden befestigt. Sämtliche weitere Komponenten und deren Ausrichtungen der Funktionseinheiten 20 und 20' entsprechen im Wesentlichen den Komponenten der Funktionseinheit 1 der Fig. 5, wobei die Anordnungen und Ausrichtungen der Komponenten der Funktionseinheiten 20 und 20' bezüglich der Querebene E, in welcher sich der Träger 26 erstreckt und die senkrecht zur Strömungsrichtung S ausgerichtet ist, zueinander gespiegelt sind.

Entsprechend sind Ventilklappen 27 und 27' der Funktionseinheiten 20 und 20' mit Fussbereichen 27.1 und 27.1' am Träger 26 befestigt. In Ihren Offenstellungen O erstrecken sich die Ventilklappen 27 und 27' in Strömungsrichtung S ausgerichtet von den Fussbereichen 27.1 und 27.1' in entgegengesetzte Richtungen und begrenzen in Richtung von H jeweils einen Stauraum 25 und 25`. Die Stauräume 25 und 25' sind jeweils in Richtung von X₁ bzw. X₂ durch den Träger 26 in Strömungsrichtung S abgeschlossen. Die Ventilklappe 27 der Funktionseinheit 20 erstreckt sich entgegen der Sperrrichtung X₁ und die Ventilklappe 27' entgegen der Sperrrichtung X₂. Die Ventilklappen 27 und 27' sind als in Längsrichtung L durchgehendes Blatt, insbesondere als durchgehendes Blech ausgebildet. Eine Länge l' des durchgehenden Blattes entspricht dabei im Wesentlichen einer Länge des Gehäuses 203. Die Ventilklappen 27 und 27' weisen somit einen gemeinsamen Fussbereich 27.1/27.1' auf, mit welchem sie am Träger 26 befestigt sind.

Zwischen der jeweiligen Ventilklappe 27 und 27' und einer der Begrenzungswand 203.2 in Höhenrichtung H gegenüberliegenden Begrenzungswand 203.1 des Gehäuses 203 sind Durchströmbereiche 24 und 24' der Funktionseinheiten 20 und 20' angeordnet. Die Durchströmbereiche 24 und 24' bilden einen durchgehenden Durchströmbereich, welcher die Luftstromöffnungen 210 und 211 von einem Lüftungsstrom längs der Strömungsrichtung S durchströmbar verbindet.

Lamellenartige Stützrippen 28 und 28' sind in Strömungsrichtung S ausgerichtet in den Durchströmbereichen 24 und 24' angeordnet. Ausgehend von den Fussbereichen 27.1 und 27.1' der Ventilklappen 27 und 27' weisen die Stützrippen 28 und 28' Auflagekanten 28.1 und 28.1' auf, welche sich in entgegengesetzte Richtungen längs der Längsrichtung L und jeweils entgegen der Sperrrichtung X₁ bzw. X₂ zu der Begrenzungswand 203.1 des Gehäuses 203 hin gekrümmt erstrecken. Die Stützrippen 28 und 28' sind als durchgehende Lamellen, insbesondere als durchgehende Bleche, ausgebildet, welche sich in beide Durchströmbereiche 24 und 24' erstrecken.

Figur 9 zeigt ein Stosswellenschutzventil 300 mit einem rohrförmigen Gehäuse 303 mit einem rechteckigen Querschnitt (nicht gezeigt), in welchem vier gleichartige, paarweise spiegelsymmetrisch bezüglich der Querebene E und der Längsebene F zueinander angeordnete Funktionseinheiten 30, 30', 30" und 30‴ vorhanden sind. Für eine spätere Bezugnahme wird die Kombination der vier Funktionseinheiten 30, 30', 30" und 30‴ mit Einheit 39 bezeichnet. Das Stosswellenschutzventil 300 bildet eine funktionelle Kombination der in Fig. 7 und 8 dargestellten Stosswellenventile 100 und 200. Dabei ist zu jeder der den Funktionseinheiten 10 und 10' des Stosswellenschutzventils 100 entsprechenden, parallel angeordneten Funktionseinheiten 30 und 30' ein gleichartiges und bezüglich der Querebene E spiegelsymmetrisch ausgebildetes Paar von Funktionseinheiten 30" und 30‴ analog den Funktionseinheiten 20 und 20' des Stosswellenschutzventils 200 in Serie angeschlossen. Die Sperrrichtung X₁ der parallel zueinander angeordneten Funktionseinheiten 30 und 30' weist dabei in die entgegengesetzte Richtung wie die Sperrrichtung X₂ der parallel zueinander angeordneten Funktionseinheiten 30" und 30‴. Im Folgenden werden nur gewisse Besonderheiten des Stosswellenschutzventils 300 beschrieben und es wird für weitere Merkmale auf die oben beschriebenen Ausführungsformen der Fig. 7 und 8 verwiesen.

Im Gehäuse 303 des Stosswellenschutzventils 300 erstreckt sich ein ball<enartiger Träger 36 zwischen zwei Seitenwänden (nicht dargestellt) des Gehäuses 303 in Richtung der Breite B des Stosswellenschutzventils 300. Der Träger ist bezüglich der Höhenrichtung H und der Längsrichtung L des Stosswellenschutzventils 300 jeweils mittig angeordnet. Der Träger 36 ist mit seinen Längsenden an den nicht dargestellten Seitenwänden des Gehäuses 303 befestigt. Die Ventilklappen 37' und 37" sowie 37 und 37‴ sind analog den Ventilklappen 27 und 27' der Fig. 8 jeweils als in Längsrichtung L durchgehende Blätter, insbesondere als durchgehende Bleche ausgebildet. Die durchgehenden Blätter sind, in Höhenrichtung H quer zur Strömungsrichtung S, beidseitig bezüglich der Längsebene F spiegelsymmetrisch am Träger 36 befestigt. Die Ventilklappen 37' und 37" sowie 37 und 37‴ erstrecken sich jeweils bezüglich der Längsrichtung L von gemeinsamen Fussbereichen 37.1` bzw. 37.1" sowie 37.1 bzw. 37.1‴ in entgegengesetzte Richtungen, wobei die die Ventilklappe 37 und 37' entgegen der Sperrrichtung X₁ und die Ventilklappen 37" und 37‴ entgegen der Sperrrichtung X₂ erstrecken.

Zwischen den durchgehenden Blättern der Ventilklappen 37, 37`, 37" und 37‴ sind somit zwei Stauräume 35 und 35' gebildet, welche in Längsrichtung jeweils in Sperrrichtung X, bzw. X₂ vom Träger 36 abgeschlossen sind. Der Stauraum 35 bildet einen gemeinsamen Stauraum der Funktionseinheiten 30 und 30' während der Stauraum 35' einen gemeinsamen Stauraum der Funktionseinheiten 30" und 30‴ bildet. Die Stauräume 35 und 35' sind durch die nicht dargestellten Seitenwände des Gehäuses 303 in Richtung der Breite B abgeschlossen (analog der Darstellung in Fig. 2).

Zwischen den durchgehenden Blättern der Ventilklappen 30 und 30‴ sowie 30' und 30" und jeweils gegenüberliegenden Begrenzungswänden 303.1 sind Durchströmbereiche 34, 34', 34" und 34‴ ausgebildet. Die Durchströmbereiche 34 und 34‴ sowie 34' und 34" sind paarweise durchgehend ausgebildet und schliessen seriell aneinander an. In den seriell aneinander angeschlossenen Durchströmbereichen 34 und 34‴ respektive 34' und 34" sind jeweils in Strömungsrichtung S ausgerichtete Stützrippen 38 und 38' respektive 38" und 38‴ mit Auflagekanten 38.1, 38.1', 38.1", 38.1‴ für die Ventilklappen 37, 37`, 37" und 37‴ in der Schliessstellung C ausgebildet. Die Stützrippen 38.1 und 28.1‴ sowie 38.1 ` und 38.1" von aneinander anschliessenden Durchströmbereichen sind jeweils als in Längsrichtung L durchgehende Lamellen ausgebildet.

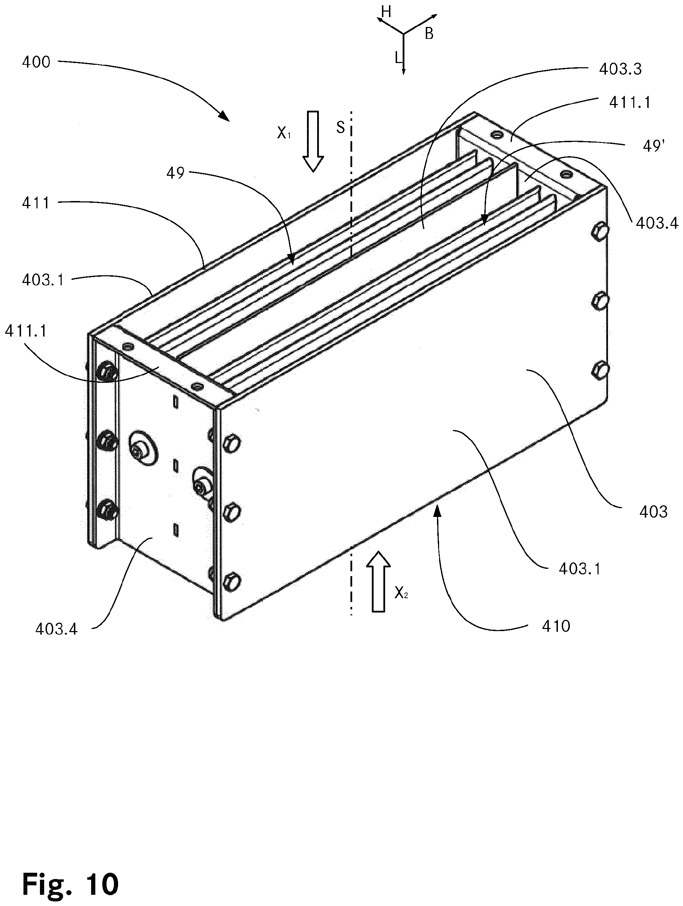

Durch die serielle Anordnung der Funktionseinheiten 30' und 30" bzw. 30 und 30‴ wird ein Stosswellenschutzventil 300 bereitgestellt, welches in beide durchströmbaren Richtungen blockierbar ist und, aufgrund der parallelen Anordnung der Funktionseinheiten 30 und 30' bzw. 30" und 30‴ gleichzeitig einen verhältnismässig grossen durchströmbaren effektiven Querschnitt aufweist. Es versteht sich, dass die von den vier Funktionseinheiten 30, 30', 30" und 30‴ gebildete Einheit 39 in mehrfacher Ausfertigung in einem erfindungsgemässen Stosswellenventil strömungsmässig parallel zueinander angeordnet vorhanden sein kann (siehe z.B. Fig. 10 bis 14).

Figuren 10 bis 14 zeigen Ansichten einer konkreten Umsetzung eines Stosswellenschutzventils 400, in welchem zwei funktionelle Einheiten 39 wie sie im Zusammenhang mit Fig. 9 schematisch beschrieben sind, in einem verschraubten Gehäuse 403 strömungsmässig parallel angeordnet sind. Die Figuren 10 bis 14 sind gemeinsam beschreiben.

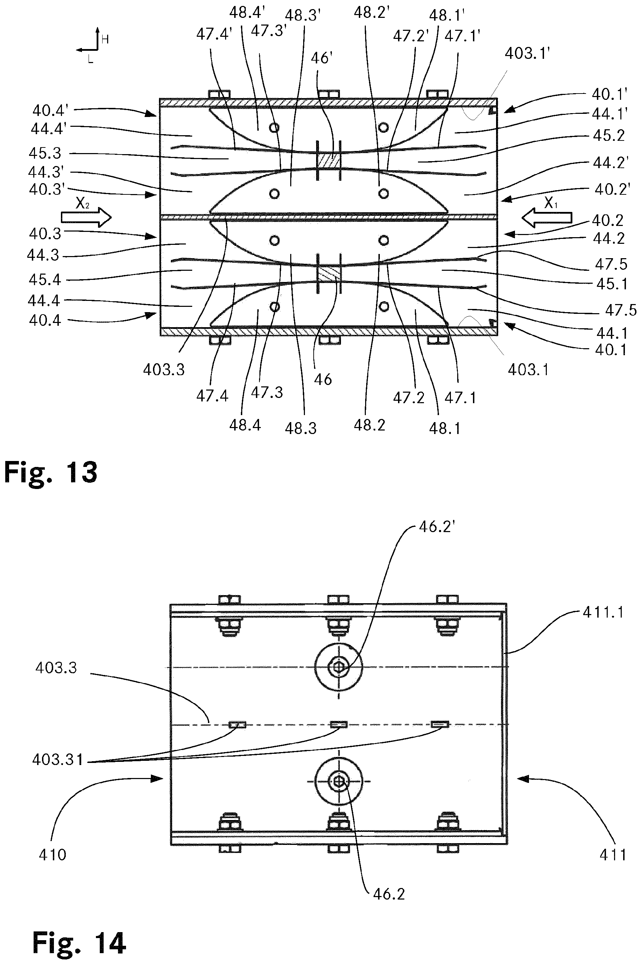

Figur 10 zeigt eine äussere Schrägansicht des Stosswellenschutzventils 400. Das Gehäuse 403 weist endseitig Luftstromöffnungen 410 und 411 auf, wobei die Luftstromöffnung 411 mit Befestigungsflanschen 411.1 zum Anschluss an z.B. einen Lüftungskanal einer Lüftungsanlage versehen ist. In einem Innenraum des Gehäuses 403 sind zwei Einheiten 49 und 49' angeordnet, welche jeweils im Wesentlichen analog zur Einheit 39 ausgebildet sind und hier nicht mehr im Detail beschrieben werden. Die Einheit 49 weist vier gleichartig zur Einheit 39 ausgebildete und angeordnete Funktionseinheiten 40.1 bis 40.4 auf, während die Einheit 49' analog vier Funktionseinheiten 40.1' bis 40.4' aufweist (siehe z.B. Fig. 13). Die Funktionseinheiten 40.1 und 40.2 sowie 40.1' und 40.2' haben eine Sperrrichtung X, während die Funktionseinheiten 40.3 und 40.4 sowie 40.3' und 40.4' eine entgegen gerichtete Sperrrichtung X₂ haben.

Im Stosswellenschutzventil 400 sind die beiden Einheiten 49 und 49' durch eine Trennwand 403.3 gegeneinander abgegrenzt, welche sich auf halber Höhe in Richtung von H über die gesamte Breite in Richtung von B parallel zur Strömungsrichtung S durch das Gehäuse 403 erstreckt. Seitenwände 403.4 begrenzen das Gehäuse 403 in der Richtung der Breite B nach aussen während die Wände 403.1 das Gehäuse 403 in Richtung von H nach aussen begrenzen.

Die Einheiten 49 und 49' sind in Richtung von H übereinander angeordnet und die Trennwand 403.3 bildet eine Begrenzungswand der innenliegenden Funktionseinheiten 40.2, 40.3 sowie 40.2' und 40.3`. Die beiden Einheiten 49 und 49' sind bezüglich einer von der Trennwand 403.3 definierten Ebene spiegelsymmetrisch ausgebildet.

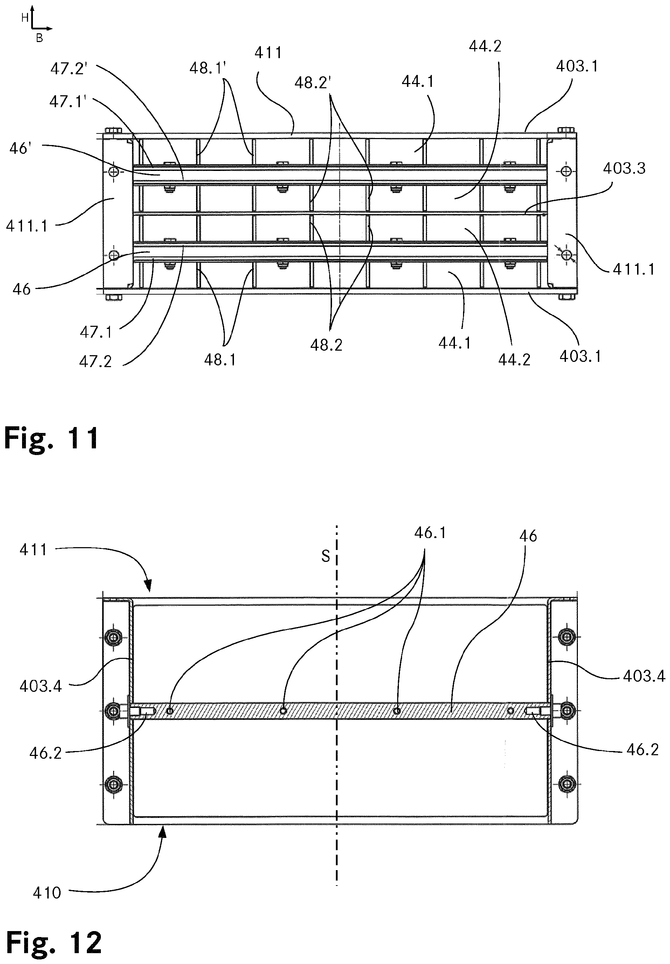

Figur 11 zeigt eine Draufsicht auf die Luftstromöffnung 411 des Stosswellenschutzventils 400 in Richtung der Sperrrichtung X₁. Zwei Träger 46 und 46' erstrecken sich in Richtung der Breite B quer zur Strömungsrichtung S durch das gesamte Gehäuse 403 und sind an den Seitenwänden 403.4 befestigt. Die Träger 46 und 46' sind jeweils in Richtung von H mittig zwischen der Trennwand 403.3 und den Seitenwänden 403.1 des Gehäuses 403 angeordnet. In Höhenrichtung H sind jeweils beidseitig der Träger 46 und 46' durchgehende Blätter der Ventilklappen 47.1 bis 47.4 und 47.1' bis 47.4' der Funktionseinheiten 40.1 bis 40.4 und 40.1' bis 40.4' befestigt. Die Ventilklappen 47.1 bis 47.4 und 47.1' bis 47.4' befinden sich in den Fig. 10 bis 14 jeweils in ihren Offenstellungen O.

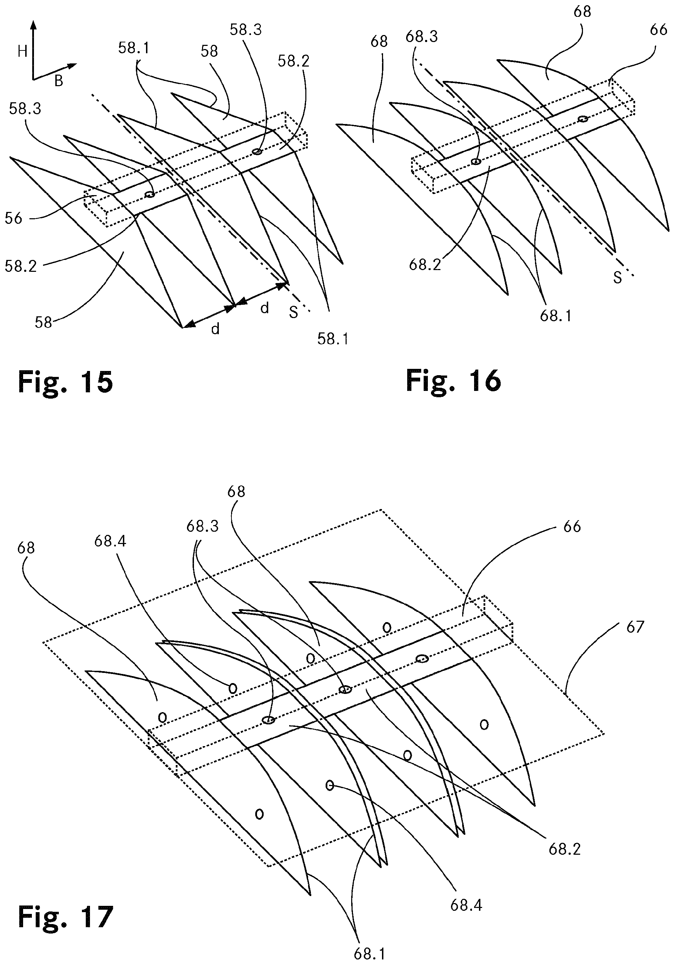

Ebenfalls an den Trägern 46 und 46' sind paarweise über Befestigungsbrücl<en 48.2 (siehe Figuren 15 und 16) verbundene Stützrippen 48.1 bis 48.4 und 48.1' bis 48.4' in Durchströmbereichen 44.1 bis 44.4 und 44.1' bis 44.4' der Funktionseinheiten 40.1 bis 40.4 und 40.1' bis 40.4' befestigt. Die Stützrippen 48.1 und 48.4, 48.2 und 48.3, 48.1' und 48.4' sowie 48.2' und 48.3' sind jeweils als in Längsrichtung L durchgehende Lamellen ausgebildet.

Figur 12 zeigt einen Querschnitt in einer Längsebene, in welcher sich der Träger 46 erstreckt und welche parallel zur Längsrichtung L ausgerichtet ist. Der ball<enartige Träger 46 (und analog der Träger 46') ist durch direkte axiale Verschraubungen 46.2, welcher von aussen her durch die Seitenwände 403.4 hindurchragen, im Gehäuse 403 befestigt. Bohrungen 46.1 für Befestigungsschrauben im Träger 46 dienen zur Befestigung der Stützrippen 48.1 bis 48.4 sowie der durchgehenden Blätter der Ventilklappen 47.1 bis 47.4.

Figur 13 zeigt eine Schnittansicht in einer Ebene parallel zur Längsrichtung L und zur Höhenrichtung H. Die freien Längsenden der Ventilklappen 47.1 bis 47.4 und 47.1' bis 47.4' weisen jeweils eine Schliesskante 47.5 auf, welche durch eine Abwinkelung im Endbereich gebildet ist (exemplarisch an den freien Enden der Ventilklappen 47.1 und 47.2 bezeichnet).

Mit dem abgewinkelten Bereich liegen die Ventilklappen 47.1 bis 47.4 und 47.1` bis 47.4' in ihren Schliessstellungen C an den Wänden 403.1 bzw. der Trennwand 403.3 an. Zwischen den Paaren von Ventilklappen 47.1 und 47.2 sowie 47.3 und 47.4 und ebenso den Paaren der Ventilklappen 47.1' und 47.2' sowie 47.3' und 47.4' sind jeweils für jedes Paar gemeinsame Stauräume 45.1, 45.2, 45.3 respektive 45.4 angeordnet

Figur 14 zeigt eine Aussenansicht auf das Stosswellenschutzventil 400 auf eine der Seitenwände 403.4 längs der Breitenrichtung B. Erkennbar sind die von aussen durch die Seitenwände 403.4 reichende Verschraubungen 46.2 bzw. 46.2' der Träger 46 und 46`. Zudem sind drei Befestigungszungen 403.31 der Trennwand 403.3 erkennbar, welche in entsprechende Ausnehmungen der Seitenwand 403.3 eingreifen und so die Trennwand 403.3 im Gehäuse 403 halten.

Figur 15 zeigt schematisch eine Ausführungsform von zwei über jeweils eine Befestigungsbrücke 58.2 verbundene, gleichartige Stützrippenpaare 58. Die Stützrippenpaare 58 weisen geradlinig ausgebildete Auflagekanten 58.1 für eine starre Ventilklappe (siehe z.B. Fig. 3) auf, wenn sich diese in der Schliessstellung C befindet. Die Stützrippen 58 sind für eine Anordnung von zwei gleichartigen, seriell aneinander angeschlossenen Funktionseinheiten z.B. gemäss der Ausführungsform der Fig. 9 vorgesehen, bei welcher sich die Stützrippen in Strömungsrichtung S in beide Durchströmbereiche erstrecken. Die Befestigungsbrücke 58.2 weist eine Durchgangsbohrung 58.3 auf, welche zur Befestigung in einem Stosswellenschutzventil, z.B. für eine Verschraubung an einem Träger 56 (gestrichelt angedeutet), vorgesehen ist. Die Befestigungsbrücke 58.2 definiert einen Abstand d der einzelnen Stützrippen des Stützrippenpaares 58 in Breitenrichtung B. Die beiden Stützrippenpaare 58 sind in demselben Abstand d zueinander angeordnet, sodass sich ein konstanter Abstand d aller Stützrippen ergibt.

Figur 16 zeigt schematisch eine Ausführungsform von zwei über jeweils eine Befestigungsbrücke 68.2 verbundene Stützrippenpaare 68 analog der Figur 15 mit dem Unterschied, dass die Auflagekanten 68.1 gekrümmt ausgebildet sind und eine längs der Strömungsrichtung S veränderliche Steigung aufweisen.

Figur 17 zeigt schematisch eine weitere Ausführungsform von drei jeweils über eine Befestigungsbrücke 68.2 verbundene Stützrippenpaare 68 wie in Fig. 16 dargestellt. Im Gegensatz zu der Darstellung der 16 sind einander zugewandte Stützrippen der benachbarten Stützrippenpaare 68 direkt nebeneinander angeordnet und über Verschraubungen 68.4 miteinander verschraubt. Die direkt nebeneinander angeordneten Stützrippen können aneinander anliegen oder eine Zwischenlage (nicht gezeigt) aufweisen, welche die Stützrippen verstärken. Auf diese Weise kann eine strukturelle Stabilität der Stützrippen durch die Verschraubung sowie gegebenenfalls durch die Verstärkungslage verbessert werden. in Fig. 17 ist zudem ein durchgehendes Ventil klappen blatt 67 gestrichelt angedeutet, welches zwischen einem Träger 66 (ebenfalls gestrichelt) und den Befestigungsbrücl<en 68.2 der Stützrippenpaare eingeklemmt ist. Die zur Befestigung am Träger 66 durch die Durchgangsbohrungen 68.3 in den Träger 66 reichenden Verschraubungen (nicht gezeigt) können somit ebenfalls zur Befestigung des Ventilklappenblattes 67 genutzt werden. Das Ventilklappenblatt 67 weisst hierzu entsprechende Durchgangsbohrungen auf.

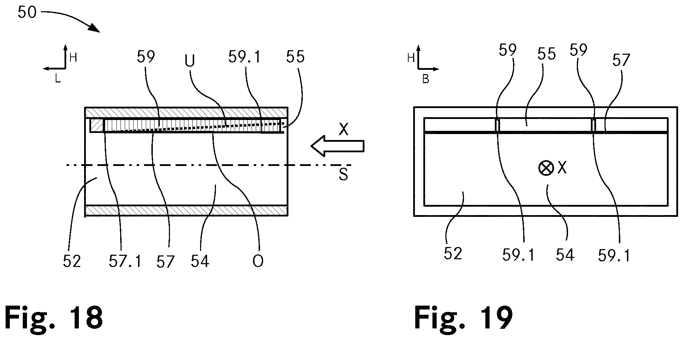

Figur 18 zeigt eine Querschnittsansicht einer weiteren erfindungsgemässen passiv arbeitenden mechanischen Funktionseinheit 50 für ein Stosswellenschutzventil mit Anschlagsrippen 59 im Stauraum 55. Die Schnittebene der Fig. 18 geht durch eine der Anschlagsrippen 59. Figur 19 zeigt schematisch eine Draufsicht auf die Funktionseinheit 50 mit Blickrichtung in Sperrrichtung X. Figuren 18 und 19 sind im Folgenden gemeinsam beschrieben.

Die Funktionseinheit 50 ist weitgehend analog der Funktionseinheit 1 der Fig. 1 ausgebildet und umfasst einen sich in der Strömungsrichtung S erstreckenden Strömungskanal 52. Im Strömungskanal 52 ist ein Durchströmbereich 54 vorhanden, durch welchen ein Lüftungsstrom strömen kann und welcher durch eine im Strömungskanal 52 in Strömungsrichtung angeordnete Ventilklappe 57 gegenüber einem ebenfalls im Strömungskanal 52 angeordneten Stauraum 55 abgegrenzt ist.

Zusätzlich gegenüber der Funktionseinheit 1 sind Anschlagselemente 59 im Stauraum 55 angeordnet, welche als in Strömungsrichtung S ausgerichtete Anschlagsrippen ausgebildet sind. Die Anschlagsrippen 59 bilden Anschläge für die Ventilklappe 57, welche in der Offenstellung O an zum Durchströmbereich 54 hin weisenden Anschlagskanten 59.1 der Anschlagsrippen 59 anliegt. Die Ventilklappe 57 ist dabei derart in Richtung zum Stauraum 55 federbelastet vorgespannt, dass sie mit einer Federkraft gegen die Anschlagkanten 59.1 gedrückt wird.

Ist die Ventilklappe 57 federelastisch biegsam ausgebildet, kann die Vorspannung dadurch erreicht werden, dass die Ventilklappe 57 in entspanntem Zustand zum Stauraum 55 hin in einem Fussbereich 57.1 abgewinkelt ausgebildet ist. D.h. in Abwesenheit der Anschlagsrippen 59 würde die Ventilklappe 57 in diesem Fall gegenüber der Strömungsrichtung S z.B. geneigt in den Stauraum 55 ragen, wie in Fig. 18 gestrichelt als Stellung U angedeutet. Ist die Ventilklappe 57 gelenkig befestigt, kann z.B. ein zusätzliches Federelement (nicht gezeigt) oder das Federelement des Gelenks, welches die Ventilklappe 57 in der Offenstellung (O) hält, die Vorspannung aufbringen.

Sind zwei Funktionseinheiten parallel angeordnet und weisen einen gemeinsamen Stauraum auf wie z.B. in Fig. 7 dargestellt, kann sich die Anschlagsrippe im gemeinsamen Stauraum erstrecken und in Höhenrichtung H beidseitig Anschlagskanten aufweisen, sodass die beiden Ventilklappen von beiden Seiten her an derselben Anschlagsrippe anliegen (nicht dargestellt). Sind zwei Funktionseinheiten in Serie aneinander angeschlossen wie z.B. in Fig. 8 dargestellt, können sich die Anschlagsrippen als durchgehende Lamelle in beide Stauräume der beiden aneinander angeschlossenen Funktionseinheiten erstrecken (nicht dargestellt).

Zusammenfassend ist festzustellen, dass die passiv arbeitende mechanische Funktionseinheit gemäss der Erfindung eine vielseitig einsetzbare Grundeinheit für ein Stosswellenschutzventil bildet. Insbesondere können im Wesentlichen baugleiche Funktionseinheiten strömungsmässig parallel und seriell in einem Stosswellenschutzventil angeordnet werden, sodass ein vergleichsweise geringer Strömungswiderstand erreicht wird und dennoch der Durchgang einer Stosswelle in einer oder beide Richtungen längs einer Strömungsrichtung wirkungsvoll blockierbar ist.

## Patentansprüche

1. Passiv arbeitende mechanische Funktionseinheit (1, 10, 10`) für ein Stosswellenschutzventil (100, 200, 300), insbesondere für eine Lüftungsanlage, umfassend:
a) einen Strömungskanal (2, 12, 12') mit einem Durchströmbereich (4, 14, 14`), welcher in einer Strömungsrichtung (S) von einem Lüftungsstrom durchströmbar ist und der in einem Störungsfall in einer Sperrrichtung (X) infolge einer in Sperrrichtung (X) propagierenden Stosswelle blockierbar ist,
b) eine blattartige Ventilklappe (7, 17, 17`), die in einer Offenstellung (O) gehalten ist und die in einem Störungsfall durch die Stosswelle zumindest abschnittweise quer zur Strömungsrichtung (S) in den Durchströmbereich (4, 14, 14`) in eine Schliessstellung (C) auslenkbar ist, in welcher der Durchströmbereich (4,14,'14') in der Sperrrichtung (X) von der Ventilklappe (7, 17, 17') blockiert ist, wobei
c) die Ventilklappe (7, 17, 17') zwischen einem im Strömungskanal (2, 12, 12') angeordneten und entgegen der Sperrrichtung (X) offenen Stauraum (5, 15) und dem Durchströmbereich (4, 14, 14') derart angeordnet ist,
d) dass im Störungsfall beim Durchgang der Stosswelle im Stauraum (5,15) ein Druck (P) aufbaubar ist, welcher die Ventilklappe (7, 17, 17') zumindest abschnittweise quer zur Strömungsrichtung (S) drückt und in den Durchströmbereich (4, 14, 14') auslenkt, sodass die Ventilklappe (7, 17, 17') in die Schliessstellug (C) gelangt,
**dadurch gekennzeichnet, dass**
e) die Ventilklappe (7, 17, 17') in der Offenstellung (O) im Wesentlichen in Strömungsrichtung (S) ausgerichtet ist.

2. Mechanische Funktionseinheit gemäss Anspruch 1, **dadurch gekennzeichnet, dass** die Ventilklappe (7, 17, 17') mit einem in Sperrrichtung (X) gerichteten Fussbereich (7.1, 17.1, 17.1') im Strömungskanal (2, 12, 12') befestigt ist und sich vom Fussbereich (7.1, 17.1, 17.1') entgegen der Sperrrichtung (X) erstreckt.

3. Mechanische Funktionseinheit gemäss Anspruch 2, **dadurch gekennzeichnet, dass** der Fussbereich (7.1, 17.1, 17.1') der Ventilklappe (7, 17, 17') fest im Strömungskanal (2, 12, 12') befestigt ist und die Ventilklappe (7, 17, 17') zumindest bereichsweise, insbesondere federelastisch, biegsam ausgebildet ist oder dass die Ventilklappe (7, 17, 17') mit dem Fussbereich (7.1, 17.1, 17.1'), insbesondere federnd, gelenkig im Strömungskanal (2, 12, 12') befestigt ist.

4. Mechanische Funktionseinheit gemäss einem der Ansprüche 1 bis 3, **dadurch gekennzeichnet, dass** die Ventilklappe (7, 17, 17') in der Offenstellung (O) zum Stauraum (5, 15, 15') hin federnd vorgespannt ist, wobei wenigstens ein Anschlagselement, insbesondere im Stauraum (5, 15, 15'), ausgebildet ist, an welchem die Ventilklappe (7, 17, 17') in der Offenstellung (O) anliegt.

5. Mechanische Funktionseinheit gemäss Anspruch 1 bis 4, **dadurch gekennzeichnet, dass** wenigstens zwei, insbesondere wenigstens vier, vorzugsweise wenigstens acht, in Strömungsrichtung (S) ausgerichtete Stützrippen (8, 18, 18') im Durchströmbereich (4, 14, 14') angeordnet sind, welche jeweils wenigstens eine Auflagekante (8.1, 18.1, 18.1') für die Ventilklappe (7, 17, 17') aufweisen, an welchen die Ventilklappe (7, 17, 17') in der Schlissstellung (C) anliegt.

6. Mechanische Funktionseinheit gemäss Anspruch 5, **dadurch gekennzeichnet, dass** die Auflagekanten (8.1, 18.1, 18.1') der Stützrippen (8, 18, 18') in Sperrrichtung (X) jeweils gegenüber der Strömungsrichtung (S) geneigt sind und insbesondere ein Neigungswinkel (α) der Auflagekanten (8.1, 18.1, 18.1') gegenüber der Strömungsrichtung (S) weniger als 45°, vorzugsweise weniger als 30°, beträgt.

7. Mechanische Funktionseinheit gemäss Anspruch 6, **dadurch gekennzeichnet, dass** die Auflagekanten (8.1, 18.1, 18.1') mit stetig zunehmendem Neigungswinkel (α) gegenüber der Strömungsrichtung (S) gekrümmt verlaufen.

8. Mechanische Funktionseinheit gemäss einem der Ansprüche 1 bis 7, **dadurch gekennzeichnet, dass** die Ventilklappe (7, 17, 17') eine Länge (l) in Strömungsrichtung (S) aufweist, welche wenigstens doppelt so gross ist, wie eine Höhe (h₂) des Durchströmbereichs (4, 14, 14').

9. Mechanische Funktionseinheit gemäss einem der Ansprüche 1 bis 8, **dadurch gekennzeichnet, dass** die Ventilklappe (7, 17, 17') eine Begrenzungswand des Stauraums (5, 15) bildet und/oder dass sich der Stauraum (5, 15) quer zur Strömungsrichtung (S) im Wesentlichen über eine gesamte Breite der Ventilklappe (7, 17, 17') erstreckt und/oder dass sich der Stauraum (5, 15) in Strömungsrichtung (S) im Wesentlichen über die gesamte Länge (l) der Ventilklappe (7, 17, 17') erstreckt.

10. Mechanische Funktionseinheit gemäss einem der Ansprüche 1 bis 9, **dadurch gekennzeichnet, dass** sich die Ventilklappe (7, 17, 17') quer zur Strömungsrichtung (S) im Wesentlichen über eine gesamte Breite des Durchströmbereichs (4, 14, 14'), vorzugsweise über eine gesamte Breite des Strömungskanals (2, 12, 12'), erstreckt und/oder dass der Stauraum (5, 15, 15') eine geringere Höhe aufweist, als der Durchströmbereich (4, 14, 14').

11. Stosswellenschutzventil (100, 200, 300) für Lüftungsanlagen, umfassend wenigstens eine mechanische Funktionseinheit (1, 10, 20) nach einem der Ansprüche 1 bis 10, wobei bevorzugt die wenigstens eine Funktionseinheit (1, 10, 20) in einem Gehäuse (103, 203, 303) mit zwei Luftstromöffnungen (110, 111, 210, 211, 310, 311) angeordnet ist, welche durch den Strömungskanal (2, 12, 22) der Funktionseinheit (1, 10, 20) verbunden sind, wobei insbesondere das Gehäuse (103, 203, 303) den Strömungskanal (2, 12, 22) der wenigstens einen Funktionseinheit (1, 10, 20) zumindest teilweise begrenzt.

12. Lüftungsanlage mit wenigstens einem Lüftungskanal und wenigstens einem daran angeschlossenen Stosswellenventil (100, 200, 300, 400) nach Anspruch 11 .

13. Prüfanlage mit einem Stosswellengenerator und einem Stosswellenschutzventil (100, 200, 300, 400) nach Anspruch 11.

14. Verfahren zum Messen eines Schliessdrucks und/oder eines Strömungswiderstandes eines Stosswellenschutzventils (100, 200, 300, 400) nach Anspruch 11, umfassend die Schritte
a) Einsetzen des Stosswellenschutzventils (100, 200, 300, 400) in ein Stosswellenrohr;
b) Erzeugen eines konstanten Luftstroms im Stosswellenrohr;
c) Bestimmung eines Messwertes des Luftstroms;
d) Erzeugen einer Stosswelle im Stosswellenrohr;
e) Bestimmung eines Messwertes für den Druckabfall;
f) Vergleichen der Messwerte mit vorgegebenen Werten um festzustellen, ob das Stosswellenschutzventil schliesst.

15. Verwendung eines Stosswellenschutzventils (100, 200, 300, 400) nach Anspruch 11 in einem Prüflabor für Explosionsschutz-Bestimmungen.

## Claims

1. A passively operating mechanical functional unit (1, 10, 10') for a shock wave protection valve (100, 200, 300), in particular for a ventilation system, comprising:
a) a flow channel (2, 12, 12') with a through-flow region (4, 14, 14') through which a ventilation flow is able to flow in a direction of flow (S) and which, in the event of a disruption, is able to be blocked in a blocking direction as a result of a shock wave propagating in the blocking direction (X),
b) a leaf-like valve flap (7, 17, 17') which is held in an open position (O) and which, in the event of a disruption, is able to be deflected by the shock wave, at least partially transversely to the direction of flow (S) into the through-flow region (4, 14, 14'), into a closed position (C) in which the through-flow region (4, 14, 14') is blocked in the blocking direction (X) by the valve flap (7, 17, 17'),
whereby
c) the valve flap (7, 17, 17') is arranged between a stagnation space (5, 15), arranged in the flow channel (2, 12, 12') and open counter to the blocking direction (X), and the through-flow region (4, 14, 14') such that,
d) in the event of a disruption, as the shock wave passes through, a pressure (P) is able to be built up in the stagnation space (5, 15), which pressure pushes the valve flap (7, 17, 17') at least partially transversely to the direction of flow (S) and deflects it into the through-flow region (4, 14, 14') such that the valve flap (7, 17, 17') passes into the closed position (C),
**characterized in that**
e) the valve flap (7, 17, 17') is oriented substantially in the direction of flow (S) in the open position (O).

2. The mechanical functional unit as claimed in claim 1, **characterized in that** the valve flap (7, 17, 17') is fastened in the flow channel (2, 12, 12') by a foot region (7.1, 17.1, 17.1') directed in the blocking direction (X), and extends from the foot region (7.1, 17.1, 17.1') counter to the blocking direction (X).

3. The mechanical functional unit as claimed in claim 2, **characterized in that** the foot region (7.1, 17.1, 17.1') of the valve flap (7, 17, 17') is fastened fixedly in the flow channel (2, 12, 12') and the valve flap (7, 17, 17') is at least regionally flexible, in particular spring-elastically or **in that** the valve flap (7, 17, 17') is fastened in the flow channel (2, 12, 12'), in particular resiliently, in an articulated manner by the foot region (7.1, 17.1, 17.1').

4. The mechanical functional unit as claimed in one of claims 1 to 3, **characterized in that** the valve flap (7, 17, 17') is resiliently preloaded, in the open position (0), toward the stagnation space (5, 15, 15'), wherein at least one stop element is formed, in particular in the stagnation space (5, 15, 15'), against which the valve flap (7, 17, 17') bears in the open position (O).

5. The mechanical functional unit as claimed in claims 1 to 4, **characterized in that** at least two, in particular at least four, preferably at least eight, supporting ribs (8, 18, 18') that are oriented in the direction of flow (S) and are arranged in the through-flow region (4, 14, 14'), which supporting ribs (8, 18, 18') each have at least one contact edge (8.1, 18.1, 18.1') for the valve flap (7, 17, 17'), and against which the valve flap (7, 17, 17') bears in the closed position (C).

6. The mechanical functional unit as claimed in claim 5, **characterized in that** the contact edges (8.1, 18.1, 18.1') of the supporting ribs (8, 18, 18') are each inclined, in the blocking direction (X), with respect to the direction of flow (S), and in particular an inclination angle (α) of the contact edges (8.1, 18.1, 18.1') with respect to the direction of flow (S) is less than 45°, preferably less than 30°.

7. The mechanical functional unit as claimed in claim 6, **characterized in that** the contact edges (8.1, 18.1, 18.1') extend in a curved manner with a continuously increasing inclination angle (α) with respect to the direction of flow (S).

8. The mechanical functional unit as claimed in one of claims 1 to 7, **characterized in that** the valve flap (7, 17, 17') has a length (l) in the direction of flow (S) which is at least twice as large as a height (h₂) of the through-flow region (4, 14, 14').

9. The mechanical functional unit as claimed in one of claims 1 to 8, **characterized in that** the valve flap (7, 17, 17') forms a boundary wall of the stagnation space (5, 15) and/or in that the stagnation space (5, 15) extends transversely to the direction of flow (S) substantially across an entire width of the valve flap (7, 17, 17') und/oder **in that** the stagnation space (5, 15) extends in the direction of flow (S) substantially along the entire length (l) of the valve flap (7, 17, 17').

10. The mechanical functional unit as claimed in one of claims 1 to 9, **characterized in that** the valve flap (7, 17, 17') extends transversely to the direction of flow (S) substantially across an entire width of the through-flow region (4, 14, 14'), preferably across an entire width of the flow channel (2, 12, 12') and/or **in that** the stagnation space (5, 15, 15') has a smaller height than the through-flow region (4, 14, 14').

11. A shock wave protection valve (100, 200, 300) for ventilation systems, comprising at least one mechanical functional unit (1, 10, 20) as claimed in one of claims 1 to 10, whereby, preferably, the at least one functional unit (1, 10, 20) is arranged in a housing (103, 203, 303) with two air-flow openings (110, 111, 210, 211, 310, 311) which are connected by the flow channel (2, 12, 22) of the functional unit (1, 10, 20), wherein in particular the housing (103, 203, 303) at least partially delimits the flow channel (2, 12, 22) of the at least one functional unit (1, 10, 20).

12. A ventilation system having at least one ventilation channel and at least one shock wave valve (100, 200, 300, 400), connected thereto, as claimed in claim 11.

13. A test system having a shock wave generator and a shock wave protection valve (100, 200, 300, 400) as claimed in claim 11.

14. A method for measuring a closing pressure and/or a flow resistance of a shock wave protection valve (100, 200, 300, 400) as claimed in claim 11, comprising the steps of
a) inserting a shock wave protection valve (100, 200, 300, 400) into a shock wave tube;
b) generating a constant air flow in the shock wave tube;
c) determining a measured value of the air flow;
d) generating a shock wave in the shock wave tube;
e) determining a measured value for the pressure drop;
f) comparing the measured values with predefined values in order to establish whether the shock wave protection valve closes.

15. The use of a shock wave protection valve (100, 200, 300, 400) as claimed in claim 11 in a test laboratory for explosion protection regulations.

## Revendications

1. Unité fonctionnelle mécanique (1, 10, 10') à fonctionnement passif, destinée à une soupape de protection (100, 200, 300) contre les ondes de choc, notamment d'un dispositif de ventilation, comprenant :
a) un conduit d'écoulement (2, 12, 12'), pourvu d'une zone de passage (4, 14, 14'), laquelle est susceptible d'être traversée dans une direction d'écoulement (S) par un flux de ventilation et qui dans un cas de panne, est susceptible d'être bloquée dans une direction de fermeture (X), suite à une onde de choc se propageant dans la direction de fermeture (X),
b) un clapet de soupape (7, 17, 17') de type lame, qui est maintenu dans une position d'ouverture (O) et qui dans un cas de panne, est susceptible d'être dévié par l'onde de choc au moins par endroits à la transversale de la direction d'écoulement (S) dans la zone de passage (4, 14, 14') dans une position de fermeture (C), dans laquelle la zone de passage (4,14,'14') est bloquée dans la direction de fermeture (X) par le clapet de soupape (7, 17, 17'),
c) le clapet de soupape (7, 17, 17') étant placé entre un espace d'accumulation (5, 15), placé dans le conduit d'écoulement (2, 12, 12') et ouvert à l'encontre de la direction de fermeture (X) et la zone de passage (4, 14, 14'), de telle sorte
d) que dans le cas de panne, lors du passage de l'onde de choc dans l'espace d'accumulation (5, 15), une pression (P) puisse s'établir, laquelle pousse le clapet de soupape (7, 17, 17') au moins par endroits à la transversale de la direction d'écoulement(S) et le dévie dans la zone de passage (4, 14, 14'), de telle sorte que le clapet de soupape (7, 17, 17') arrive dans la position de fermeture (C), **caractérisée en ce que**
e) dans la position d'ouverture (O), le clapet de soupape (7, 17, 17') est orienté sensiblement dans la direction d'écoulement (S).

2. Unité fonctionnelle mécanique selon la revendication 1, **caractérisée en ce que** par une zone basse (7.1, 17.1, 17.1') dirigée dans la direction de fermeture (X), le clapet de soupape (7, 17, 17') est fixé dans le conduit d'écoulement (2, 12, 12') et s'étend de la zone basse (7.1, 17.1, 17.1') à l'encontre de la direction de fermeture (X).

3. Unité fonctionnelle mécanique selon la revendication 2, **caractérisée en ce que** la zone basse (7.1, 17.1, 17.1') du clapet de soupape (7, 17, 17') est solidement fixée dans le conduit d'écoulement (2, 12, 12') et le clapet de soupape (7, 17, 17') est conçu au moins par endroits de manière flexible, notamment élastique, ou **en ce que** le clapet de soupape (7, 17, 17') est fixé par la zone basse (7.1, 17.1, 17.1'), de manière articulée, notamment résiliente dans le conduit d'écoulement (2, 12, 12').

4. Unité fonctionnelle mécanique selon l'une quelconque des revendications 1 à 3, **caractérisée en ce que** dans la position d'ouverture (O), le clapet de soupape (7, 17, 17') est précontraint de manière résiliente vers l'espace d'accumulation (5, 15, 15'), au moins un élément de butée, sur lequel le clapet de soupape (7, 17, 17') s'appuie dans la position d'ouverture (O) étant conçu notamment dans l'espace d'accumulation (5, 15, 15').

5. Unité fonctionnelle mécanique selon la revendication 1 à 4, **caractérisée en ce qu'**au moins deux, notamment au moins quatre, de préférence au moins huit nervures de soutien (8, 18, 18') orientées dans la direction d'écoulement (S), dont chacune comporte au moins une arête d'appui (8. 1, 18.1, 18.1') pour le clapet de soupape (7, 17, 17'), sur lesquelles le clapet de soupape (7, 17, 17') s'appuie dans la position de fermeture (C) sont placées dans la zone de passage (4, 14, 14').

6. Unité fonctionnelle mécanique selon la revendication 5, **caractérisée en ce que** dans la direction de fermeture (X), les arêtes d'appui (8.1, 18.1, 18.1') des nervures de soutien (8, 18, 18') sont inclinées chacune dans la direction d'écoulement (S) et notamment un angle d'inclinaison (α) des arêtes d'appui (8.1, 18.1, 18.1') par rapport à la direction d'écoulement (S) est inférieur à 45°, de préférence inférieur à 30°.

7. Unité fonctionnelle mécanique selon la revendication 6, **caractérisée en ce que** les arêtes d'appui (8.1, 18.1, 18.1') s'écoulent en étant recourbées avec un angle d'inclinaison (α) sans cesse croissant par rapport à la direction d'écoulement (S).

8. Unité fonctionnelle mécanique selon l'une quelconque des revendications 1 à 7, **caractérisée en ce que** le clapet de soupape (7, 17, 17') présente une longueur (1) dans la direction d'écoulement (S) qui correspond au moins au double d'une hauteur (h₂) de la zone de passage (4, 14, 14').

9. Unité fonctionnelle mécanique selon l'une quelconque des revendications 1 à 8, **caractérisée en ce que** le clapet de soupape (7, 17, 17') constitue une paroi de délimitation de l'espace d'accumulation (5, 15) et / ou **en ce que** l'espace d'accumulation (5, 15) s'étend à la transversale de la direction d'écoulement (S), sensiblement sur une largeur totale du clapet de soupape (7, 17, 17') et / ou **en ce que** l'espace d'accumulation (5, 15) s'étend dans la direction d'écoulement (S) sensiblement sur toute la longueur (1) du clapet de soupape (7, 17, 17').

10. Unité fonctionnelle mécanique selon l'une quelconque des revendications 1 à 9, **caractérisée en ce que** le clapet de soupape (7, 17, 17') s'étend à la transversale de la direction d'écoulement (S) sensiblement sur une largeur totale de la zone de passage (4, 14, 14'), de préférence sur une largeur totale du conduit d'écoulement (2, 12, 12'), et / ou en ce que l'espace d'accumulation (5, 15, 15') présente une hauteur inférieure à celle de la zone de passage (4, 14, 14').

11. Soupape de protection (100, 200, 300) contre les ondes de choc, destinée à des dispositifs de ventilation, comprenant au moins une unité fonctionnelle mécanique (1, 10, 20) selon l'une quelconque des revendications 1 à 10, de préférence, l'au moins une unité fonctionnelle (1, 10, 20) étant placée dans un carter (103, 203, 303) pourvu de deux orifices (110, 111, 210, 211, 310, 311) de circulation d'air, lesquels sont reliés par le conduit d'écoulement (2, 12, 22) de l'unité fonctionnelle (1, 10, 20), notamment le carter (103, 203, 303) délimitant au moins partiellement le conduit d'écoulement (2, 12, 22) de l'au moins une unité fonctionnelle (1, 10, 20).

12. Dispositif de ventilation, pourvu d'au moins un conduit de ventilation et d'au moins une soupape de protection (100, 200, 300, 400) contre les ondes de choc selon la revendication 11, raccordée sur celuici.

13. Installation d'essai, pourvue d'un générateur d'ondes de choc et d'une soupape de protection (100, 200, 300, 400) contre les ondes de choc selon la revendication 11.

14. Procédé, destiné à mesurer une pression de fermeture et / ou une résistance à l'écoulement d'une soupape de protection (100, 200, 300, 400) contre les ondes de choc selon la revendication 11, comprenant les étapes consistant à
a) insérer la soupape de protection (100, 200, 300, 400) contre les ondes de choc dans un tube à ondes de choc ;
b) créer un flux d'air constant dans le tube à ondes de choc ;
c) déterminer une valeur de mesure du flux d'air ;
d) créer un onde de choc dans le tube à ondes de choc ;
e) déterminer une valeur de mesure pour la chute de pression ;
f) comparer la valeur de mesure avec des valeurs prédéfinies, pour constater si la soupape de protection contre les ondes de choc se ferme.

15. Utilisation (100, 200, 300, 400) d'une soupape de protection contre les ondes de choc selon la revendication 11 dans un laboratoire d'essai pour déterminer des protections antidéflagrantes.
